# EUROPÄISCHE PATENTSCHRIFT

(11) **EP 1 711 390 B1**
(45) Veröffentlichungstag und Bekanntmachung des Hinweises auf die Patenterteilung: **14.01.2009**
(21) Anmeldenummer: 05715213.4
(22) Anmeldetag: 26.01.2005
(51) Int. Cl.: B62D 3/12

(54) **KEILVERSTELLBARES LAGER FÜR EIN KRAFTFAHRZEUG-LENKGETRIEBE**
WEDGE-DISPLACEABLE BEARING FOR A MOTOR VEHICLE STEERING GEAR
PALIER REGLABLE PAR CLAVETTE POUR MECANISME DE DIRECTION DE VEHICULE AUTOMOBILE

(30) Priorität: 26.01.2004 DE 102004003992; 24.02.2004 DE 102004009451
(43) Veröffentlichungstag der Anmeldung: 18.10.2006
(73) Patentinhaber: SchmitterGroup AG, 97289 Thüngen (DE)
(72) Erfinder: GÜNTHER, Friedhelm, 44359 Dortmund (DE)
(74) Vertreter: Götz, Georg Alois
(86) Internationale Anmeldenummer: PCT/EP2005/000743
(87) Internationale Veröffentlichungsnummer: WO 2005/070745

(56) Entgegenhaltungen:
- EP-A- 1 046 569
- WO-A-20/04067357
- DE-A1- 3 835 947
- US-A- 5 265 691
- PATENT ABSTRACTS OF JAPAN Bd. 008, Nr. 032 (M-275), 10. Februar 1984 (1984-02-10) & JP 58 188750 A (FUJI JUKOGYO KK), 4. November 1983 (1983-11-04)

## Beschreibung

Die Erfindung betrifft ein Lagermodul für ein Kraftfahrzeug-Lenkgetriebe mit einer Zahnstange und einem damit in Eingriff stehenden Antriebsritzel nach Oberbegriff des Anspruchs 1. Ferner betrifft die Erfindung ein Kraftfahrzeug-Lenkgetriebe, bei dem innerhalb eines Getriebe-Gehäuses eine Zahnstange mit einem Antriebsritzel in Eingriff steht und ein entsprechendes Lagermodul montiert ist, nach Oberbegriff des Anspruchs 30. Weiter betrifft die Erfindung ein Kraftfahrzeug-Lenkgetriebe mit innerhalb eines Getriebe-Gehäuses miteinander in Eingriff stehenden Zahnstange und Antriebsritzel, nach Oberbegriff des Anspruchs 33. Weiter betrifft die Erfindung eine Druckschale, die als Führungsdruckteil für ein derartiges Lagermodul oder als Druckstück für ein derartiges Lenkgetriebe geeignet ist, nach Oberbegriff des Anspruchs 49. Ferner betrifft die Erfindung ein für ein derartiges Lenkgetriebe geeignetes Gehäuse nach Ansprüche 54 und 57.

Ein gattungsgemäßes Zahnstangen-/Ritzel-Lenksystem ist in Patent Abstracts of Japan JP 58 020 561 A beschrieben. Die Einstellbarkeit des Eingriffsspiels zwischen Zahnstange und Ritzel soll mittels eines Keilmechanismus erleichtert werden. Eine der beiden Schrägen des Keilmechanismus wird von einem Gleitblock gebildet, der über eine federbelastete Schraube translatorisch verstellbar ist. Über den Keilmechanismus wird die translatorische Verschiebung des Gleitblocks in eine radiale Druckkraft auf die Zahnstange umgewandelt. Die Verschiebung des keilförmigen Gleitblocks erfolgt durch eine das Lenkgetriebegehäuse seitlich, quer zur Längsachsrichtung, durchsetzende Stellschraube ebenfalls in dieser Querrichtung. Daraus ergibt sich die Notwendigkeit, beim Lenkgetriebe-Gehäuse zusätzliche, bauliche und konstruktive Vorkehrungen wie eine seitliche Queröffnung mit extra Ansatz usw. treffen zu müssen.

Eine automatische Verschleißaufholung bzw. Einstellung ist durch die in US-A-3 820 415 beschriebene Zahnstangen-Ritzel-Anordnung für Kfz-Lenkungen ermöglicht. Hierzu wird jedoch von einem exzentrischen Lager in der Form eines gekrümmten und zu drehenden Keilsegmentes Gebrauch gemacht, welches in einer Aussparung im Ritzelgehäuse gleitet und so verdreht wird, dass es die Zahnstange zum Ritzel hin drückt. Der gekrümmte Teil hat nur den Freiheitsgrad, sich in der Aussparung zu drehen, Ist jedoch gegenüber einer axialen Verschiebung durch eine extra vorgesehene Umfangsrippe an der konvexen Seite des Kelles axial festgehalten. Mittels einer Feder wird der Keil in Umfangsrichtung so vorgespannt, dass er zum engen Ende des Spaltes hin automatisch nachgedreht werden kann. Dadurch soll die Zahnstange in einen voll kämmenden Eingriff mit dem Ritzel gedrückt werden, im Sinne der angestrebten Verschleißaufholung.

Nach WO-A-2004/067 357 wird zum Druck von Zahnstange und Ritzel aufeinander ebenfalls von einem exzentrischen Lagermodul Gebrauch gemacht, das vor der eigentlichen Montage im Zahnstangengehäuse aus einem Bausatz als eigenständige Einbau-Einheit (Lagermodul) vormontiert wird. Allerdings ist durch die Art der Konstruktion die Notwendigkeit zusätzlicher, manueller Feinjuafferungen nicht gegeben. Eine rotatorische Vorspannung der exzentrischen Lagerbohrung zwecks Verschleißaufholung ist nicht vorgesehen.
US 5 265 691 zeigt ein Lager für eine Zahnstangenlenkung, mit einem quer zur Lenkachse verschieblichen, in einer quer zur Lenkachse ausgebildeten Buchse angeordneten Lagergrundmodul, das mittels einer Feder und eines keilförmigen Justierungselements gegen einen quer zur Lenkachse eingeschraubten Stützkopf abgestützt ist, wobei das keilförmige Justierungselement in einer mit der Lenkachse achsparallelen Ebene quer zur Lenkachse verschieblich geführt ist.

Der Erfindung liegt die Aufgabe zugrunde, bei einem Lenkgetriebe das Druckstück für den Antriebsritze-Zahnstangen-Eingriff so weiterzuentwickeln dass bei Erhalt der Möglichkeit einer komfortablen, nachträglichen Feinjustage des Druckstücks sich eine Vereinfachung des Lenkgetriebe-Gehäuses in seiner Form und seiner Herstellbarkeit ergibt. Zur Lösung werden das im Patentanspruch 1 angegebene Lagermodul, die in den Patentansprüchen 28 und 31 angegebenen Lenkgetriebe, die im Patentanspruch 45 als Führungsdruckteil für ein Lagermodul oder als Druckstück für ein Lenkgetriebe vorgeschlagene Druckschale und das im Patentanspruch 48 angegebene, spezifische Gehäuse vorgeschlagen. Optionale, weitere Erfindungsmerkmale ergeben sich ganz oder teilweise aus den abhängigen Ansprüche.

mit der Erfindung wird der Vorteil erzielt, die Feineinstellung des Zahnstangenspieles mittels eines länglichen Werkzeugs von der Stirnseite des rohrartigen Getriebegehäuses her in axialer und achsparalleler Richtung vornehmen zu können. Da die Stirnseite des länglichen und in der Regel rohrartigen Getriebegehäuses ohnehin stets offen ist, entfällt die Notwendigkeit gemäß Stand der Technik, eine gesonderte Gehäusepartie auszubilden, um das Druckstück und dessen kellartigen Einstellmechanismus radial bzw. von der Seite quer zur Längsrichtung erreichen zu können. Da mit der Erfindung spezifische Zugänge zum Druckstück quer zur Zahnstangen-Längsachse nicht mehr ausgebildet werden müssen, lässt sich erfindungsgemäß eine erhebliche Vereinfachung und Verbilligung des Getriebegehäuses erreichen.

Gemäß einer Erfindungsausbildung sind die eine oder mehreren Keileinrichtungen innerhalb der Aufnahmekonkavität des Druckstücks angeordnet. Indem dadurch den keilartig erzeugten Radialkräften das Druckstück in Richtung Zahnstange nicht mehr vorgeschaltet ist, lässt sich eine direktere Einwirkung der einen oder mehreren Keileinrichtungen auf das Spiel zwischen Zahnstange und Antriebsritzel erreichen. Diesem Gesichtspunkt dient auch eine Erfindungsausbildung, nach der die eine oder mehreren Keileinrichtungen direkt an der Druckstückwandung, welche die Konkavität begrenzt, anliegen oder abgestützt sind. Um in diesem Zusammenhang eine ausreichend effektive Führung für die Hin- und Herbewegung der Zahnstange zu gewährleisten, ist es zweckmäßig, der Kette "Druckstück-Innenwandung, Keileinrichtung(en) ..." noch als weiteres Glied ein oder mehrere den eigentlichen Führungsdurchgang begrenzende Führungsdruckteile nachzuschalten. Mit besonderem Vorteil wären dann die eine oder mehreren Keileinrichtungen zwischen dem Druckstück und dem oder den Führungsdruckteilen angeordnet. Bei Weiterführung dieses Gedankens ergibt sich eine besonders vorteilhafte Erfindungsausbildung dahingehend, dass je eine der beiden aneinander liegenden Schrägen einer Keileinrichtung einerseits an einer Druckstückinnenwandung und andererseits an der gegenüberliegenden Wandung des jeweiligen Führungsdruckteils ausgebildet sind. Damit reduziert sich die Kraftwirkungs-Kette auf die beiden Komponenten "Druckstück" und "Führungsdruckteil", was eine Minimierung der notwendigen Anzahl an Baukomponenten ergibt.

Ein herstellungstechnisch effizienter Weg, die Druckstückinnenwandung mit der oder den jeweils ersten Schrägen der gemeinsam mit den Führungsdruckteilen zu bildenden Keileinrichtungen zu versehen, besteht in der Einprägung von Vertiefungen im Druckstück-Außenmantel bzw. auf der Druckstück-Außenseite, wobei die Vertiefungen komplementäre Formen zu den Umrissen der Schrägen haben.

Die Montage wird erleichtert, wenn nach einer Erfindungsausbildung an der Druckstück-Innenwandung oder im Zahnstangen-Führungsdurchgang ein oder mehrere Tragmittel ausgebildet sind, worüber das oder die Führungsdruckteile zum Keilbereich oder zum Zahnstangen/Ritzel-Eingriffsbereich geführt werden können.

Zur Kraftumlenkung von der axialen in die radiale Richtung auf die Zahnstange kann gemäß einer Erfindungsausbildung alternativ oder zusätzlich zu der zuvor angesprochenen Keileinrichtung, welche sich durch die Druckstückinnenwandung und der Führungsdruckteil-Außenwandung integrale Schrägen auszeichnet, mindestens ein separat gebildetes Keilstück mit zwei im spitzen Winkel verlaufenden Keilflanken vorgesehen sein. In weiterer, zweckmäßiger Ausgestaltung verläuft eine Keilflanke axial oder achsparallel, während die andere Keilflanke eine der beiden Schrägen einer Keileinrichtung bildet und deren zweiter Schräge zur Anlage zugeordnet ist. Letztere kann auf der dem Keilstück gegenüberliegenden Außenseite des Führungsdruckteils oder gegenüberliegender Innenseite des Druckstücks komplementär zur ersten Schräge ausgebildet sein. Damit wird der Vorteil einer besonders leichtgängig einstellbaren Keileinrichtung erzielt, weil das separat gebildete Keilstück ein loses, leichtgewichtiges, vorzugsweise aus Kunststoff hergestelltes Teil sein kann. Zur Herstellung des losen Keilstücks eignet sich besonders Kunststoff-Spritzgießen. Dies gilt auch für das oder die Führungsdruckteile, insbesondere wenn dieses eine Art Buchsenform besitzt.

Die Lagegenauigkeit und Funktionszuverlässigkeit lässt sich mit einer Erfindungsausbildung erhöhen, wonach das Keilstück mit einem oder mehreren Anschlägen versehen ist, die quer vorspringen und dem Druckstück und/oder dem Führungsteil zur Anlage bzw. zum Gegenhalt in einer zum Führungsdurchgang konzentrischen Umfangsrichtung zugeordnet sind. Dadurch lässt sich eine Sicherung des Keilstücks vor dessen Verdrehen erreichen.

Die Handhabbarkeit und/oder Bedienungsfähigkeit des Lagermoduls lässt sich mit einer Erfindungsausbildung erhöhen, wonach eine Stelleinrichtung angeordnet ist und mit der einen oder den mehreren Keileinrichtungen zu deren axialen oder achsparallelen Verstellung in Wirkungsverbindung steht. Dazu ist es zweckmäßig, die Stelleinrichtung so auszubilden und zu lagern, dass sie gegenüber dem Druckstück bewegbar geführt und/oder arretierbar oder feststellbar ist.

Gemäß einer Erfindungsausbildung ist ein Federelement zur Vorspannung einer Keilrichtung in axialer und/oder achsparalleler Richtung angeordnet. Ein damit erzielter Vorteil besteht darin, dass sich gezielt ein axiales Spiel zwischen der Stelleinrichtung und der Keileinrichtung bilden lässt, welches unter der Rückstellkraft des Federelements steht. Dadurch kann sich das Druckstück und/oder das Führungsdruckteil axial etwas gegen die Kraft des Federelements hin- und herbewegen. In weiterer Konsequenz lässt sich damit ein Zahnstangenspiel gezielt einstellen.

Zur Realisierung der Vorspannung besteht eine Erfndungsausbildung darin, das jeweilige Federelement gegen die Stelleinrichtung einerseits und gegen eines zweier gegeneinander verstellbarer Schrägelemente einer Keileinrichtung andererseits abzustützen. Dies lässt sich besonders einfach mit einer Ringfeder praktizieren, die konzentrisch zum Zahnstangen-Führungsdurchgang angeordnet ist. Alternativ oder zusätzlich lässt sich das Federelement baulich mit dem oder einem der Führungsdruckteile integrieren, indem dort eine Aufnahmekammer ausgebildet ist, worin das Federelement aufgenommen ist. Mit besonderem Vorteil ist das Federelement so ausgebildet, dass es mit einem Teil oder Abschnitt aus der Aufnahmekammer vorsteht. Damit wird der Vorteil erzielt, dass die Stelleinrichtung leicht an dem Federelement angreifen kann. Alternativ kann die Stelleinrichtung einen Druckvorsprung zum Eingriff in die Aufnahmekammer und zum Druck auf das darin untergebrachte Federelement aufweisen. Als Material für das in der Aufnahmekammer unterzubringende Federelement eignet sich besonders Elastomer.

Das Lagermodul muss derart im Lenkgetriebegehäuse montiert sein, dass die mittels des oder der Keileinrichtungen erzeugbaren, radialen Druckkräfte auf diejenige Seite der Zahnstange gerichtet sind, welche den Zahnstangenzähnen abgewandt ist. Zur Sicherung einer derart lagerichtigen Lagermodul-Montage bei schneller Handhabbarkeit wird gemäß einer Erfindungsausbildung vorgeschlagen, dass der Außenmantel des Druckstücks mit einer oder mehreren Orientierungsvorsprüngen und/oder -Vertiefungen versehen ist. Diese sind komplementären Vertiefungen bzw. Vorsprüngen auf der Innenseite des (gedachten) Lenkgetriebegehäuses zugeordnet und in Umfangsrichtung so positioniert, dass bei Montage mit der Zahnstange und dem Antriebsritzel im Lenkgetriebegehäuse die von der konkaven Wandung der Druckstückinnenseite ausgehenden radialen Kräfte auf die genannte Zahnstangen-Außenseite gelenkt sind.

Für eine einfach handhabbare Montage ist es zweckmäßig, wenn im Rahmen der Erfindung das Druckstück und gegebenenfalls das oder die damit konzentrisch angeordneten Führungsdruckteile zumindest teilweise mit einer offenen Längsseite parallel zur Achse des Führungsdurchgangs gestaltet sind. So lässt sich die Zahnstange im Eingriffsbereich mit dem Antriebsritzel leicht innerhalb der Aufnahmekonkavität des Druckstücks/der Führungsdruckteile einführen. Mit besonderem Vorteil sind dabei die Längsseitenkanten, welche die Längsseiten-Öffnung definieren, gegenüber der Achse oder einer Längsebene des Führungsdurchgangs oder eines gedachten Lenkgetriebegehäuses rampen- oder keilartig schräg verlaufend geformt. Dadurch kann sich beim Einschieben in das Lenkgetriebegehäuse das Antriebsritzel-Rohr mit den schrägen Längsseitenkanten so verkeilen, dass sich das Lagermodul im Lenkgetriebegehäuse nicht mehr verdrehen kann. Dazu ist es zweckmäßig, das Antriebsritzel-Rohr mit Kanten zu gestalten, die in das Gehäuseinnere überstehen. Durch diese Verkeilung wird der Montageverbund Lagermodul-Antriebsritzel-/Zahnstange-Eingriff und Getriebegehäuse spielfrei gemacht.

Um für die Zahnstange bezüglich ihres Führungsdurchgangs im Lagermodul oder gegebenenfalls im Lenkgetriebegehäuse eine möglichst zentrierte Positionierung zu erreichen, ist gemäß einer Erfindungsausbildung vorgesehen, auf jeden Fall mehrere Keileinrichtungen vorzusehen, die zueinander derart angeordnet sind, dass die Normalen ihrer jeweils aneinander liegenden Schrägen sich im Zentrum des Führungsdurchgangs (oder eines gedachten Lenkgetriebegehäuses) und/oder in einem Winkel kleiner als 180° kreuzen. Da die von jeder Keileinrichtung ausgehenden Radialkräfte entsprechend den Normalen verlaufen, ergibt sich so eine zentrierende konvergierende Einwirkung der Radialkräfte von den Keileinrichtungen auf die Zahnstange.

Um eine statisch eindeutig bestimmte Positionierung der Zahnstange im Führungsdurchgang zu bewirken und mit einem Minimum an Bauteilen auszukommen, ist es vorteilhaft, mit nur zwei Keileinrichtungen jeweils eine radiale Druckkraft auf die Zahnstange zu erzeugen, indem die Normalen der aneinander liegenden KeilSchrägen zur Mitte des Führungsdurchgangs der Zahnstange konvergieren. Dadurch entsteht eine Art Drei-Punkt-System, bei der die Zahnstangenabstützung eindeutig und nicht unter- und nicht überbestimmt ist.

Ein in den Rahmen der allgemeinen erfinderischen Idee fallendes Kraftfahrzeug-Lenkgetriebe, in welches das erfindungsgemäße Lagermodul montiert ist, zeichnet sich durch eine derart im Lagermodul angeordnete und derart ausgebildete Stelleinrichtung aus, dass diese durch ein axial einführbares Werkzeug betätigbar ist. Wie oben angesprochen, steht die Stelleinrichtung mit der oder den Keileinrichtungen so in Wirkungsverbindung, dass letztere axial oder achsparallel verstellbar sind.

Im Übrigen wird zur Vermeidung von Wiederholungen auf die zuvor zum Lagermodul gemachten Ausführungen, soweit für dieses Lenkgetriebe anwendbar, entsprechend verwiesen.

Im Rahmen der allgemeinen erfinderischen Idee liegt auch ein Kraftfahrzeug-Lenkgetriebe ohne das aus einem eigenständigen Bausatz zusammengesetzte Lagermodul, wobei aber gleichwohl von dem oben erläuterten Prinzip der axialen oder achsparallelen Verstellung von einer oder mehreren Keileinrichtungen entsprechend Gebrauch gemacht wird. Dazu eignet sich besonders ein Druckstück mit der Grundform eines längsseitig offenen Teil-Zylinders oder einer sonst gewölbten Schale, wobei die Schalenöffnung bzw. konkave Teilzylinderseite zum Führungsdurchgang für die Zahnstange gerichtet ist. Eine derartige Form ist relativ leicht und auch leichtgewichtig, insbesondere im Wege des Kunststoff-Spritzgusses, herzustellen und schnell im Lenkgetriebegehäuse zu montieren.

Im Rahmen der Erfindung ist es zweckmäßig, die eine oder mehreren Keileinrichtungen mit zwei komplementären, einander zur Anlage zugeordneten und gegeneinander verschiebbaren Schrägen zu realisieren. Dabei ergibt sich bei der zuletzt genannten Erfindungsalternative ohne Vormontierung eines eigenständigen Lagermoduls eine vorteilhafte Ausbildung dahingehend, dass die eine Schräge auf einer Außenseite oder einem Außenmantel des Druckstücks und die andere (Gegen)Schräge auf einer gegenüberliegenden Innenseite oder einem gegenüberliegenden Innenmantel des Lenkgetriebegehäuses ausgebildet sind. Der damit erzielte Vorteil besteht in einer Einsparung an einzelnen Bauteilen. Das ohnehin notwendige Lenkgetriebegehäuse wird mit dazu ausgenutzt, über Schrägflächen auf seiner Innenwandung mit zur Bildung der Keileinrichtung beizutragen.

Im Übrigen wird zur Vermeidung von Wiederholungen auf die zuvor im Zusammenhang mit dem Lagermodul gemachten Ausführungen, soweit für das zuletzt angesprochene Lenkgetriebe anwendbar, entsprechend verwiesen.

Zur Erhöhung der Funktionssicherheit und -zuverlässigkeit ist es zweckmäßig, das Druckstück und/oder gegebenenfalls das Lagermodul mit einer Arretiereinrichtung zu versehen, welche letztere in axialer oder achsparalleler Richtung festlegt bzw. in ihrer Lage sichert. In diesem Zusammenhang besteht eine besonders vorteilhafte, Platz und Bauteile einsparende Ausführung darin, die Arretiereinrichtung mit einem im Getriebegehäuse axial eingeführten Anschlagblock und einer radialen Verformung, beispielsweise Sickeneinformung, zu realisieren. Der Anschlagblock bildet in vorteilhafter Weise sowohl einen Lenkanschlag als auch ein Hindernis für das Lagermodul bzw. Druckstück gegen axiales Herausrutschen.

Im Rahmen der allgemeinen erfinderischen Idee liegt auch eine Druckschale, die für das vorgenannte Lagermodul als Führungsdruckteil oder für das vorgenannte Lenkgetriebe als Druckstück dienen kann. Die erfindungsgemäße Druckschale zeichnet sich durch eine Realisierung mit einem teilzylindrischen bzw. längsseitig offenen Mantel- oder Wandungsabschnitt oder einem sonst irgendwie gekrümmten Wandungsabschnitt aus, wobei sich eine konvexe Außenseite und eine konkave Innen- bzw. Öffnungsseite ergibt. Eine besonders vorteilhafte Ausbildung besteht darin, die für die vorgenannten Keileinrichtungen notwendigen Schrägseiten rampenartig schräg zur Zylinder-Längsachse oder zu einer sonstigen Längsrichtung der konkaven Öffnungsseite verlaufen zu lassen. Damit ist die Druckschale geeignet, zusammen mit gegenüberliegenden Gegen-Schrägseiten oder -flächen des Druckstücks oder des Lenkgetriebegehäuses Keileinrichtungen zu bilden. Im Übrigen darf zur Vermeidung von Wiederholungen auf die obigen Ausführungen zu den Keileinrichtungen im Zusammenhang mit dem Lagermodul oder dem Lenkgetriebe verwiesen werden, soweit hier entsprechend anwendbar.

Im Rahmen der allgemeinen erfinderischen Idee liegt auch ein Lenkgetriebe-Gehäuse, das sich durch auf der Gehäuseinnenseite ausgebildete Schrägen auszeichnet, die gegenüber einer achsparallelen Richtung ansteigend oder abfallend verlaufen. Diese Gehäuse-Innenschrägen sind geeignet, zusammen mit gegenüberliegenden Gegen-Schrägen eines Druckstücks, einer Druckschale oder eines sonstigen Lagermoduls die axial oder achsparallel verstellbaren Keileinrichtung zu bilden. Im Übrigen wird zur Vermeidung von Wiederholungen auf die zu den Keileinrichtungen im Zusammenhang mit dem Lagermodul, dem Lenkgetriebegehäuse oder der Druckschale gemachten Ausführungen, soweit hier entsprechend anwendbar, verwiesen.

Weitere Einzelheiten, Merkmale, (Unter-)Kombinationen, Vorteile und Wirkungen auf der Basis der Erfindung ergeben sich aus der nachfolgenden Beschreibung bevorzugter Ausführungsbeispiele sowie aus den Zeichnungen. Diese zeigen in:
- Figur 1: ein erstes Ausführungsbeispiel in einer auseinander gezogenen, perspektivischen Darstellung,
- Figur 2: die auseinander gezogene Darstellung der Figur 1 in geschnittener Längsseitenansicht,
- Figur 3: teilweise im Längsschnitt die in Figur 1 und 2 dargestellten Teile im fertigmontierten Zustand,
- Figur 4: eine Figur 3 entsprechende Längsseiten-Schnittansicht mit Einsatz eines Justierungswerkzeugs,
- Figur 5: in Figur 4 entsprechender Längsseiten-Schnittansicht den Einsatz eines Verstemmwerkzeugs,
- Figur 6: ein zweites Ausführungsbeispiel in auseinander gezogener, perspektivischer Darstellung,
- Figur 7a: das aus den Bausatzteilen gemäß Figur 6 zusammenmontierte Lagermodul im Längsseitenschnitt gemäß A-A in Figur 7c,
- Figur 7b: eine Schnittansicht gemäß Linie B-B in Figur 7a,
- Figur 7c: eine Stirnansicht entsprechend Pfeil C in Figur 7a,
- Figur 7d: eine Längsseitenansicht des zusammenmontierten Lagermoduls mit gestrichelt gezeichneten Innenkonturen,
- Figur 8: im auseinander gezogenen Längsseitenschnitt ein Lenkgetriebegehäuse und das fertig vormontierte, noch in das Gehäuse einzufügende Lagermodul,
- Figur 9: im Längsseitenschnitt das in das Gehäuse eingeführte Lagermodul mit anschließend noch einzuführendem Lenkanschlagring,
- Figur 10: eine Darstellung des fertigmontierten Zustands im Längsseitenschnitt mit Zahnstange und Antriebsritzel,
- Figur 11: im Längsseitenschnitt die Anwendung eines zu drehenden Justierwerkzeugs,
- Figur 12: im Längsseitenschnitt die Anwendung eines Verstemmwerkzeugs,
- Figur 13a: eine für die Druckschale vorgesehene Elastomerfeder in axialer Stirnansicht,
- Figur 13b: dieselbe Elastomerfeder in Seitenansicht,
- Figur 14: eine Stirnansicht auf den Druckring des zweiten Ausführungsbeispiels,
- Figur 15: eine auseinander gezogene, perspektivische Darstellung eines dritten Ausführungsbeispiels,
- Figur 16a: das aus den Teilen gemäß Figur 17 zusammenmontierte Lagermodul im Längsschnitt gemäß A-A in Figur 18c,
- Figur 16b: eine Schnittansicht gemäß B-B in Figur 18a,
- Figur 16c: eine Stirnansicht gemäß Pfeil C in Figur 18a,
- Figur 16d: eine Längsseitenansicht des Lagermoduls mit gestrichelt eingezeichneten Innenkonturen,
- Figur 17: im auseinander gezogenen Längsseitenschnitt das fertig vormontierte Lagermodul vor dem Einführen in das Lenkgetriebegehäuse,
- Figur 18: im Längsseitenschnitt das im Lenkgetriebegehäuse fertig mit Zahnstange und Antriebsritzel montierte Lagermodul,
- Figur 19: eine Figur 20 entsprechende Darstellung mit eingeführtem Justierwerkzeug,
- Figur 20: eine Figur 20 und 21 entsprechende Darstellung mit eingeführtem Verstemmwerkzeug.

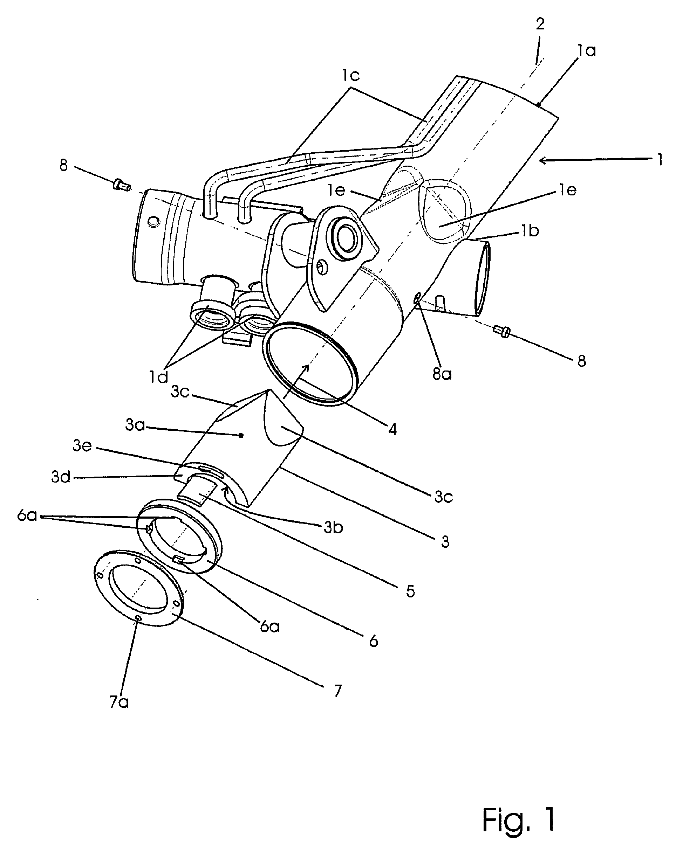

Gemäß Figur 1 besteht ein rohrartiges Lenkgetriebegehäuse 1 aus einem rohrartigen Zahnstangenteil 1a und einem dazu quer bzw. schräg verlaufenden rohrartigem Ritzelteil 1b. Beide sind mit jeweils offenen Längsseiten- bzw. Mantelbereichen aneinandergefügt, so dass Zahnstange und Antriebsritzel miteinander in Eingriff kommen können. Des Weiteren ist das Lenkgetriebegehäuse 1 mit Ölleitungen 1c und Versorgungsanschlüssen 1d versehen. Im Fügebereich zwischen Zahnstangenteilrohr 1a und Ritzelteilrohr 1b sind auf dem Außenmantel des Zahnstangen-Teilrohrs 1 a zwei ebene Einprägungen 1 e erkennbar, welche schräg zur Gehäuse-/Zahnstangenteil-Längsachse 2 zum Gehäuseinneren geneigt verlaufen und an der Gehäuseinnenseite korrespondierende, komplementäre Schrägflächen zur Bildung von Keileinrichtungen ergeben, wie noch später erläutert.

Zum Druck der Zahnstange gegen das Antriebsritzel ist ein Druckstück in der Form einer Druckschale 3 vorgesehen. Diese ist im konkreten Ausführungsbeispiel als halbzylindrisch gewölbter Mantelabschnitt mit einer konvexen Außenseite 3a und einer konkav offenen Innen- bzw. Öffnungsseite 3b realisiert. Für die Druckschale 3 ist eine Herstellung als Kunststoff-Spritzgießteil zweckmäßig. Am in ihrer Einschubrichtung 4 in das Gehäuse 1 vorderen Ende sind auf der konvexen Außenseite 3a zwei Gleit- und Anlageflächen 3c vorzugsweise eben ausgebildet, die rampenartig schräg gegenüber der Längsachse 2 bzw. der eigenen Zylinder-Längsachse 2 nach radial innen geneigt verlaufen und den Gegen-Gleit- und Anlageflächen zugeordnet sind, die sich an der Gehäuseinnenseite durch die Einprägungen 1e in den Außenmantel des Gehäuses 1 ergeben. An der hinteren Stirnseite 3d der Druckschale 3 ist eine Aufnahmekammer 3e ausgebildet, die sich in ihr Wandungsinnere erstreckt. Zur Aufnahme darin ist ein federelastischer Elastomer-Stoßkörper 5 vorgesehen. Des Weiteren sind in Einschubrichtung 4 der Druckschale 3 mit dem Elastomer-Stoßkörper 5 ein Außengewindering 6 und ein Lenkanschlagring 7 (sogenannter Lockstop) nachgeordnet.

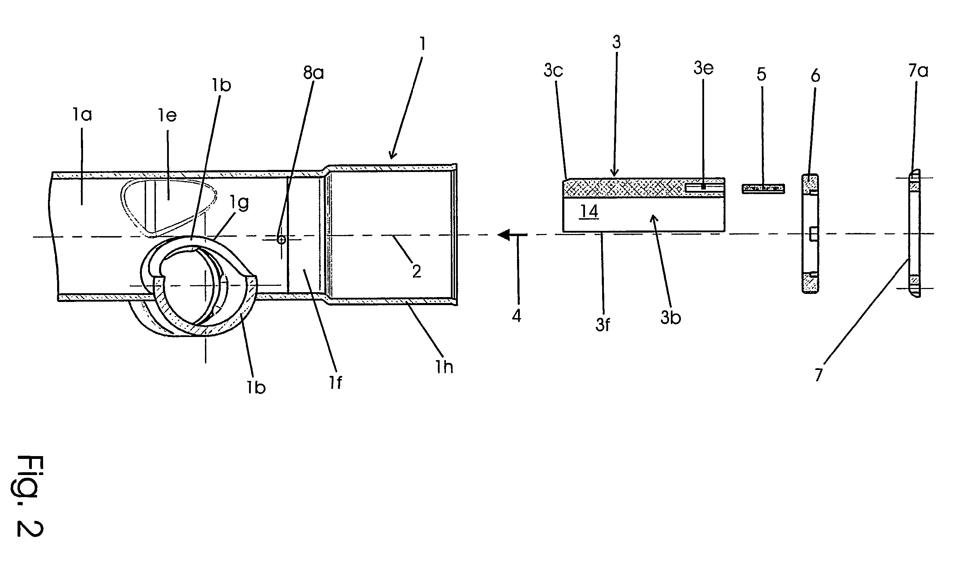

Wie auch aus Figur 2 ersichtlich, sind als Einführhilfe für die Druckschale 3 Tragmittel 8 in Form von Bolzen vorgesehen, denen Aufnahmelöcher 8a zugeordnet sind, welche die Wandung des Gehäuses 1 einander diametral gegenüberliegend durchsetzen. Auf die Bolzen bzw. Tragmittel 8 kann nach Befestigung durch Pressschweißen zwecks Dichtigkeit die Druckschale beim Einschieben 4 mit ihren seitlichen Öffnungskanten 3f aufliegen und gleiten.

Wie in Figur 2 angedeutet, besitzt der Zahnstangenteil 1a des Gehäuses 1 einen Abschnitt 1f mit einem derart ausgebildeten Innengewinde, dass damit der Außengewindering 6 in Eingriff kommen und kämmen kann.

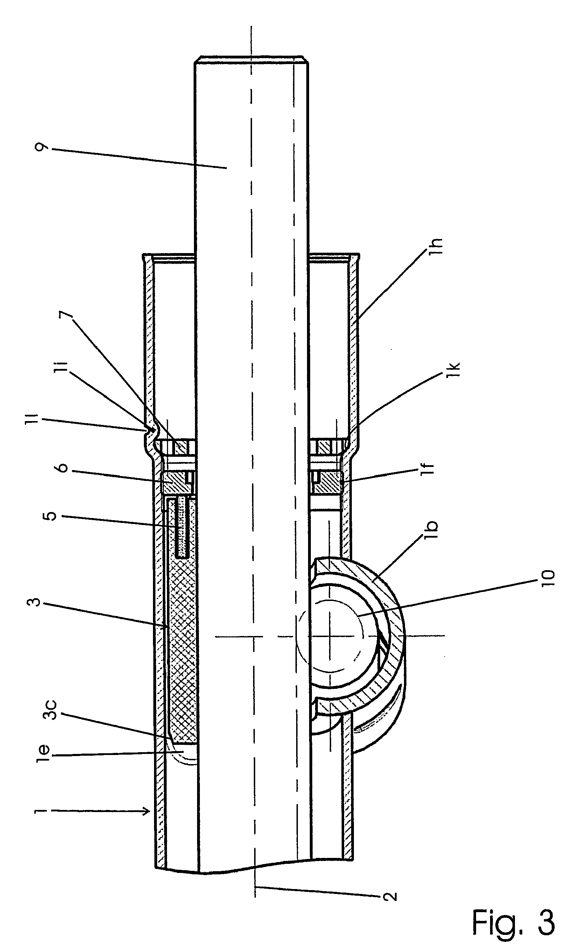

Letzteres ist in Figur 3 gezeigt, welche den fertigmontierten Zustand des erfindungsgemäßen Lenkgetriebebeispiels zeigt. Die Druckschale 3 ist soweit in das Gehäuse 1 eingeschoben, dass ihr Paar Gleit- und Anlageflächen 3c an die Gegen-Gleit- und Anlageflächen anstoßen, welche durch die Ei nprägungen 1 e gebildet sind, wie oben beschrieben. Gleichzeitig kann die Druckschale 3 mit ihren Öffnungskanten 3f auf vorstehende Kanten 1g des rohrartigen Ritzelteils aufliegen. Ferner ist gemäß Figur 3 der Elastomerstoßkörper 5 in die Aufnahmekammer der Druckschale 3 eingeführt und steht davon mit einem Restabschnitt zum Anschlag am Außengewindering 6 vor. Dieser kämmt mit dem Innengewindeabschnitt 1f des Getriebegehäuses 1. Ferner sind die Zahnstange 9 und das Antriebsritzel 10 so in den Zahnstangenteil 1a und den Ritzelteil 1b des Gehäuses 1 eingeführt und zusammengesetzt, dass sie miteinander kämmen bzw. in Eingriff stehen.

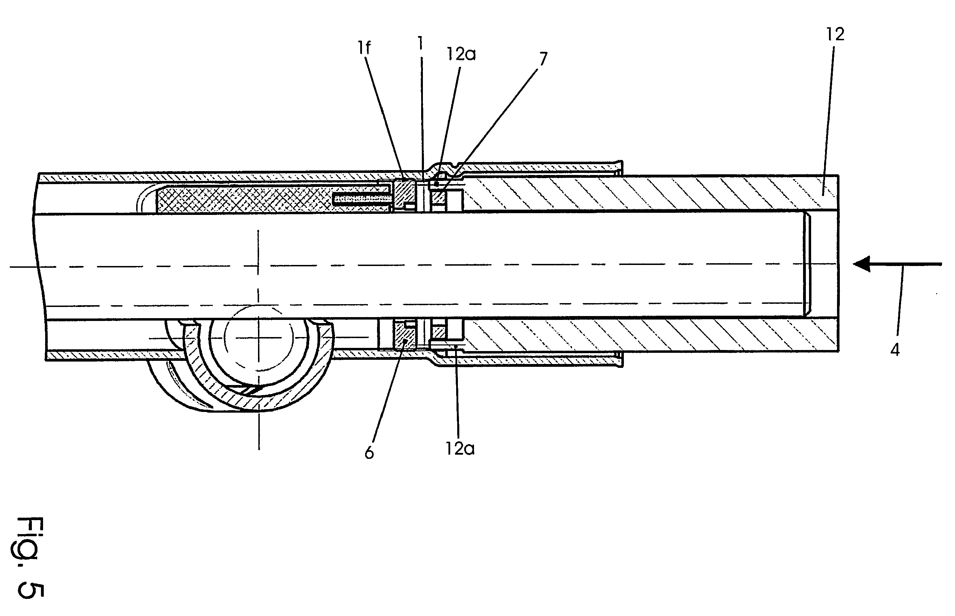

Wie vor allem aus Figur 2 und Figur 3 ersichtlich, ist der Gehäuse-Zahnstangenteil 1a mit einem radial erweiterten Endbereich 1h gestaltet, auf dessen Innendurchmesser der Lenkanschlagring 7 mit seinem Außendurchmesser zum Einschieben 4 und nachträglichen Klemmsitz abgestimmt ist. Im fertigmontierten Zustand gemäß Figur 3 ist, um den Lenkanschlagring 7 axial zu arretieren, von außen eine Sicke 1l in die Gehäusewandung so eingeformt, dass sich an der Innenseite des Zahnstangenteils 1a eine innere Wulst 1i ergibt. Diese hintergreift den Lenkanschlagring 7 an seiner rückwärtigen Stirnseite. Seine vordere, dem Außengewindering 6 zugewandte Stirnseite liegt gegen eine gehäuseinnenseitige Anschlagschulter 1k an, die sich durch die genannte, radiale Erweiterung 1 h ergibt. Gemäß Figuren 1-3 ist der Lenkanschlagring 7 achsparallel von mehreren Bohrungen 7a durchsetzt, welche dem Durchgriff eines Verstemmwerkzeugs (siehe Figur 5) dienen.

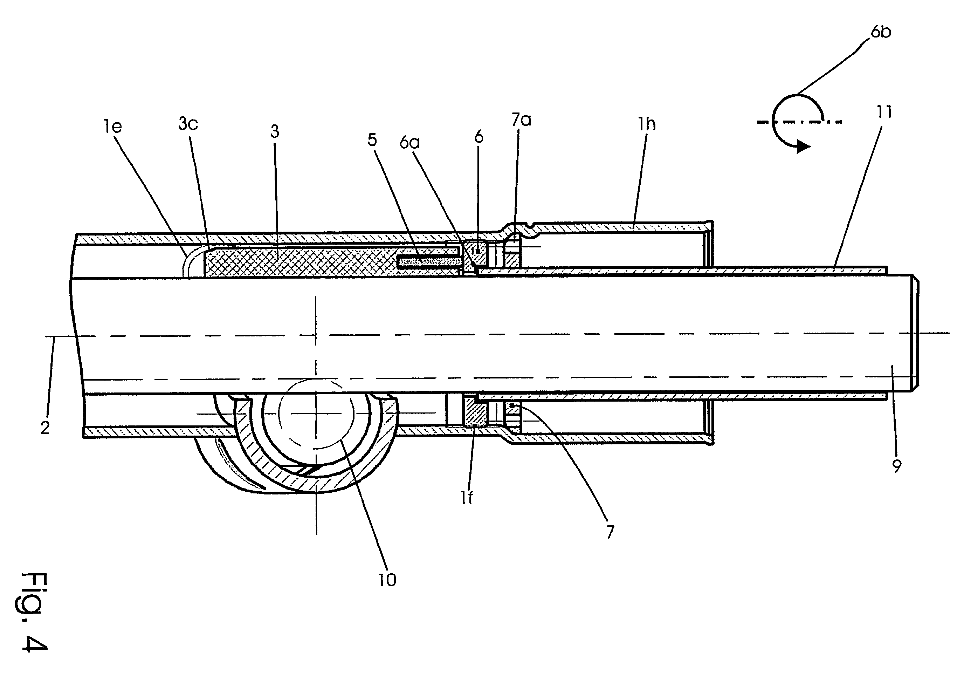

Gemäß Figur 4 ist der Innendurchmesser des Lenkanschlagrings 7 so bemessen, dass ein hohlzylindrisches Justagerohr 11 über die Zahnstange 9 und gleichzeitig durch den Lenkanschlagring 7 durchgeschoben werden kann, bis stirnseitige Vorsprünge des Justagerohrs 11 in komplementäre, stirnseitige und sich nach radial außen erstreckende Vertiefungen 6a des Außengewinderinges 6 zu dessen Verdrehung 6b mittels des Justagerohrs 11 einrücken können. Die Drehachse für den Außengewindering 6 bzw. das Justagerohr 11 stellt die zu diesen konzentrisch bzw. koaxial verlaufende Längsachse 2 dar.

Wird gemäß Figur 4 dem Justagerohr 11 eine Drehung 6b erteilt, überträgt sich diese aufgrund der stirnseitigen Vertiefungen 6a im Außengewindering 6 auf letzteren. Dadurch schraubt sich dieser bei entsprechender Drehrichtung am Innengewinde 1f entlang und drückt dabei auf den Elastomerstoßkörper 5 in der Druckschale 3. Letztere wird dadurch mit federbelastetem Spiel axial verschoben, wobei die Gleit- und Anlageflächen 3c der Druckschale 3 zunehmend gegen die Gegen-Anlage- und Gleitflächen an der Gehäuseinnenseite gedrückt werden, welche durch die genannten Einprägungen 1e gebildet sind. Die Anlage- und Gleitflächen 3c und die Einprägungen 1e bilden gemeinsam Keileinrichtungen bzw. Keilschieber mit zwei komplementären, einander zur Anlage zugeordneten und gegeneinander verschiebbaren Schrägen. Durch diese wird eine axiale Verschiebung der Druckschale 3 in eine radiale Druckkraft auf die Zahnstange 9 umgewandelt bzw. umgelenkt. Dabei kann das Justagerohr 11 so dosiert verdreht werden, dass ein axiales Spiel der Druckschale 3 über den Elastomerstoßkörper 5 zum Außengewindering 6 einstellbar ist. Dementsprechend ergibt sich ein radiales Spiel zwischen Zahnstange 9 und Antriebsritzel 10 von beispielsweise 0,05 mm, welches unter einer Federlast von z. B. 200-300 N steht. Entsprechendes gilt für das zweite und dritte Ausführungsbeispiel.

Gemäß Figur 5 wird, damit der Außengewindering 6 nach Justage seine axiale Position zuverlässig beibehält, ein Verstemmwerkzeug 12 eingesetzt. An dessen in Einschubrichtung 4 vorderer Stirnseite sind Eingriffsvorsprünge 12a ausgebildet und über dessen Umfang so verteilt angeordnet, dass sie in die vorgenannten, achsparallelen Bohrungen 7a des Lenkanschlagrings 7 eintauchen und diese durchsetzen können. Bei weiterer Axialverschiebung 4 können diese über den in Figur 5 gezeigten Zustand hinaus soweit verschoben werden, bis sie in Wirkungsverbindung mit dem Eingriffsbereich zwischen dem Außengewindering 6 und dem Gehäuse-Innengewinde 1f stehen. Sodann werden dem Verstemmwerkzeug 12 beispielsweise vibrierende Kräfte eingeprägt, so dass über die Eingriffsvorsprünge 12a die kämmenden Außen- und Innengewinde 6, 1f verstemmt oder sonst deformiert werden. Dadurch lässt sich der Außengewindering 6 nicht mehr verdrehen, bzw. er ist axial festgelegt.

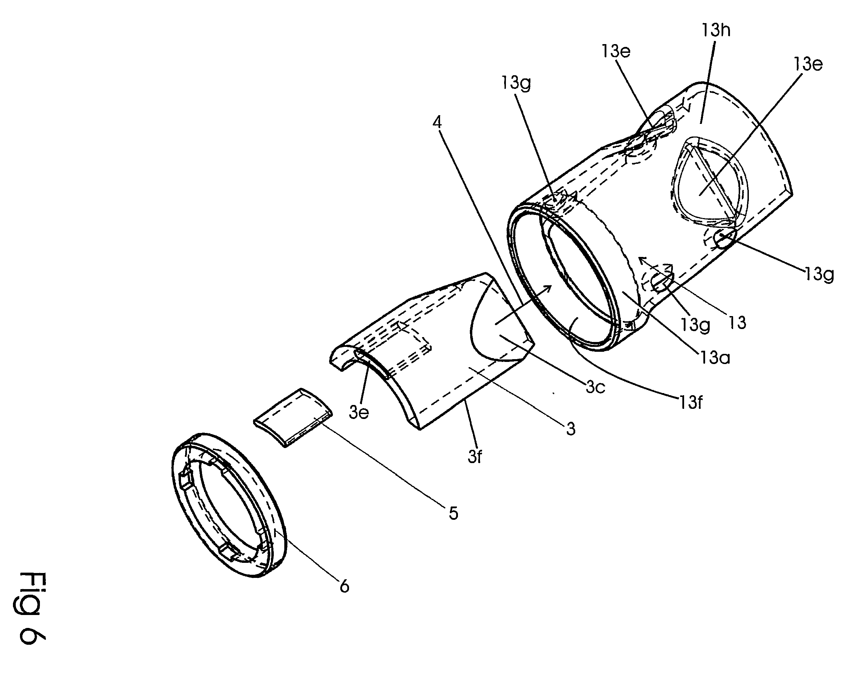

In Figur 6 ist ein Bausatz mit einer Druckschale 3 (gleichartig wie in Figur 1) mit Aufnahmekammer 3e und schräge Gleit- und Anlageflächen 3c am Vorderende gezeigt. Zum Bausatz gehören ferner der bereits oben beschriebene Elastomerstoßkörper 5, der ebenfalls oben beschriebene Außengewindering 6 und ein mit als Druckstück dienender Außendruckring 13 mit einem Innengewindeabschnitt 13a am stirnseitigen Einschubende. Der Außengewindering 6 und der Innengewindeabschnitt 13a sind zum Kämmen bzw. Eingriff miteinander angepasst. Den Gleit- und Anlageflächen komplementär zugeordnet sind Einprägungen 13e analog den Einprägungen 1e beim Getriebegehäuse 1 gemäß Ausführungsbeispiel nach Figuren 1-5. Die durch die Einprägungen 13e am Druckring innenseitig entstehenden, schrägen Gegen-Gleit- und Anlageflächen 13c bilden zusammen mit den abgeschrägten Druckschalen-Gleit- und Anlageflächen 3c jeweils axial bzw. achsparallel verstellbare Keileinrichtungen, analog wie beim Ausführungsbeispiel nach Figuren 1-5. Wird die Druckschale 3 in Einschubrichtung 4 in das Innere des Druckrings 13 eingeführt, kann sie auf Tragschultern 13g aufliegen und gleiten, welche an der Innenwandung des Druckrings 13 nach innen vorspringend ausgebildet sind. Sie lassen sich beispielsweise durch Stanzen der Druckringwandung erzeugen. Zweckmäßig sind gemäß Ausführungsbeispiel mehrere axial hintereinander liegende Paare mit jeweils zwei einander diametral gegenüberliegenden Tragschultern 13g angeordnet.

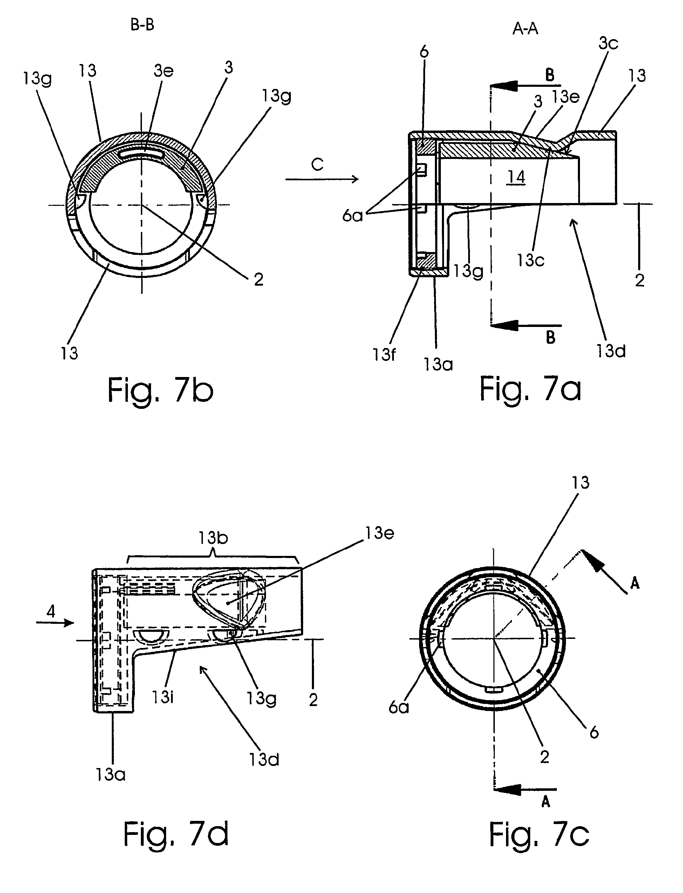

Gemäß Figur 7a ist der Bausatz mit seinen Bauteilen zu einem fertigen Lagermodul montiert. Die Druckschale 3 liegt mit ihren schrägen Gleit- und Anlageflächen 3c an den schrägen Gegen-Gleit- und Anlageflächen 13c zur Bildung einer Keileinrichtung an.

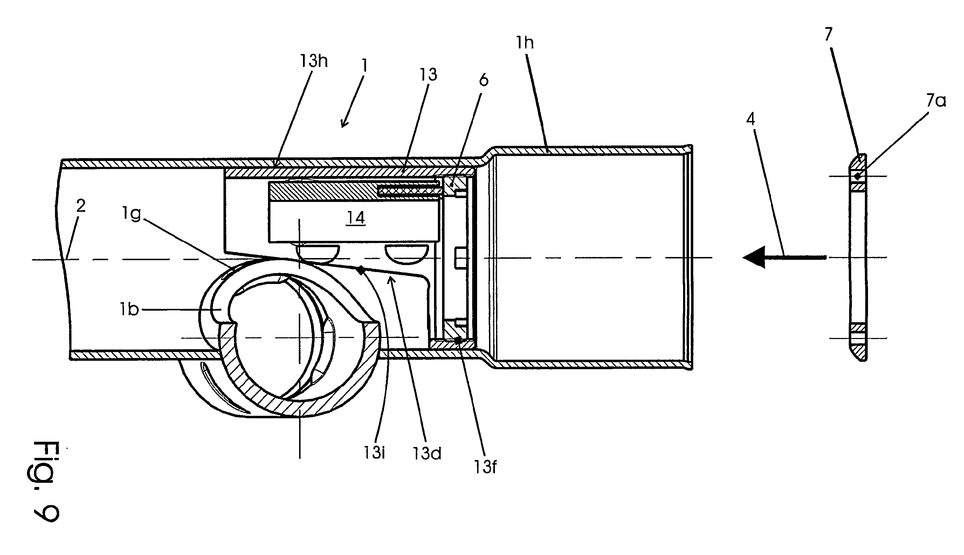

Gemäß Figuren 7a und 7d schließt sich an den ringförmigen Innengewindeabschnitt 13a des Druckrings 13 ein offener Schalenabschnitt 13b mit einer offenen, konkaven Längsseite 13d an. Deren Begrenzungsränder bzw. -kanten 13i verlaufen gegenüber der mittleren Längsachse 2 schräg, um beim Einschieben und Montieren im Lenkgetriebegehäuse mit nach innen vorstehenden Kanten 1g des Ritzelrohrteils 1b einen spielfreien Keil-Klemmsitz zu ermöglichen, wie nachstehend anhand Figur 9 erläutert.

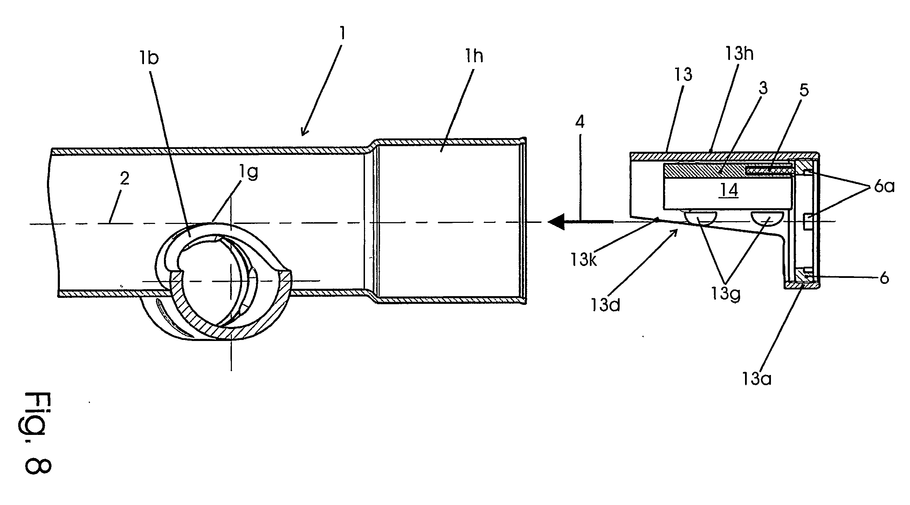

Gemäß Figur 8 soll das aus den Teilen gemäß Figur 6 zusammenmontierte Lagermodul in das Lenkgetriebegehäuse 1 gemäß Einschubrichtung 4 eingeführt werden. Erkennbar ist, dass der in der Druckschale 3 aufgenommene Elastomer-Stoßkörper 5 mit einem geringfügig herausstehenden Teil am Außengewindering 6 stirnseitig anliegt. Die Tragschultern 13g dienen als temporäre Stützen solange, bis nach Montage im Lenkgetriebegehäuse 1 eine Zahnstange in den Führungsdurchgang 14 des Lagermoduls eingeführt ist. Der Führungsdurchgang 14 ist beim zweiten Ausführungsbeispiel von der Druckschale 3 unmittelbar und vom Außen-Druckring 13 mittelbar umgeben, während beim ersten Ausführungsbeispiel gemäß Figuren 1-5 der Führungsdurchgang 14 unmittelbar von Druckschale 3 und mittelbar vom Getriebegehäuse 1 umgeben ist.

Gemäß Figur 9 ist das vormontierte Lagermodul mit gleichsam pistolenartiger Grundform in das Getriebegehäuse hineingepresst. Dabei ist es über die vorstehende Kante 1g des Ritzelrohrteils 1b geschoben und aufgrund des gegenüber der Längsachse 2 schrägen Verlaufs der Begrenzungskanten 13i spielfrei mit der ins Gehäuseinnere vorstehenden Kante 1g des Ritzelrohrteils 1b verkeilt. Die schrägen Begrenzungskanten 13i führen nämlich mit zunehmendem Einschieben 4 zu einer steigenden Radialkraft auf den Außen-Druckring 13, wodurch dieser mit seinem konvexen Außenmantel 13h gegen die Gehäuseinnenseite gedrückt wird. Der ringförmig geschlossene Innengewindeabschnitt 13a, welcher die hintere Partie des Außen-Druckrings 13 ausmacht, und mit dem Außengewindering 6 kämmt, ist mit Presssitz im Gehäuse 1 eingeklemmt. Durch die anschließenden schrägen Begrenzungskanten 13i wird der Außendruckring gegen Verdrehung gesichert und in richtiger Dreh- bzw. Umfangslage gehalten, so dass die Zahnstange im Führungsdurchgang 14 hin- und hergleiten kann.

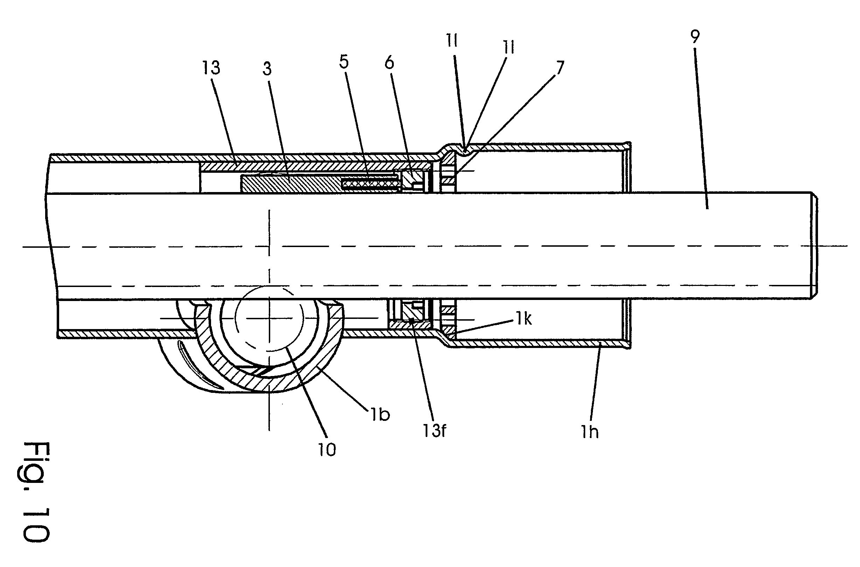

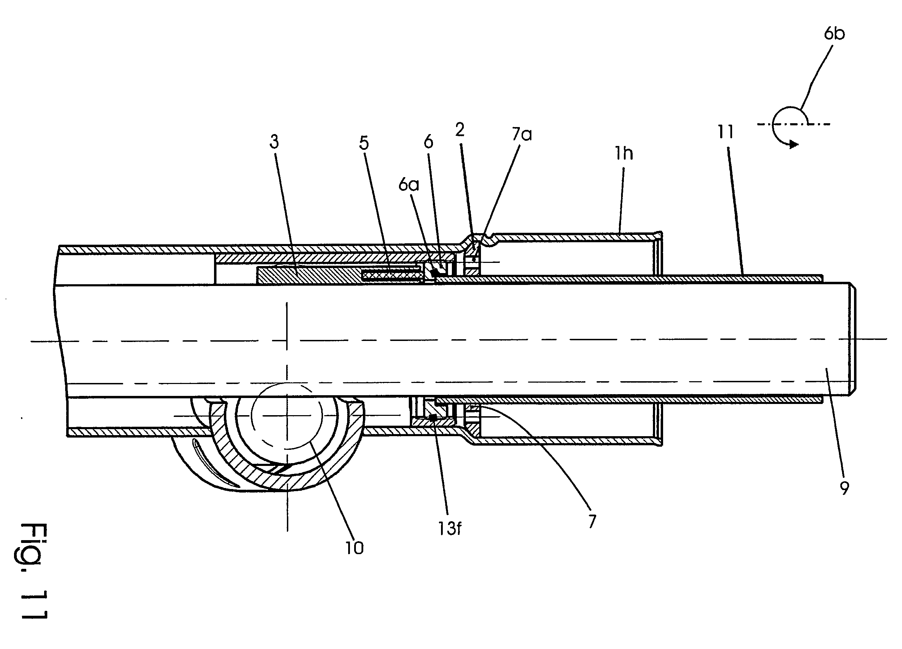

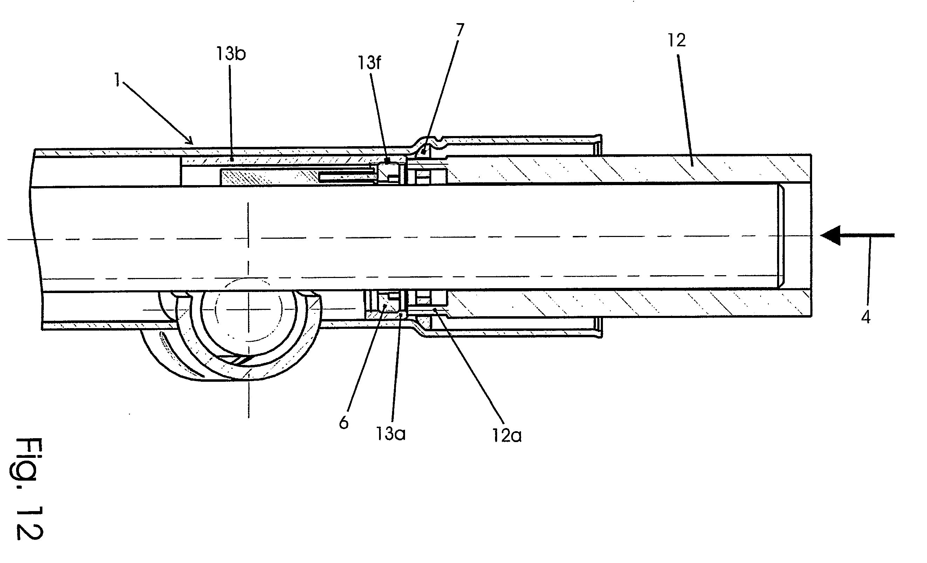

Gemäß Figur 10 ist noch der Lenkanschlagring 7 im radial erweiterten Endbereich 1h des Getriebegehäuses 1 eingelegt und mittels der Sicke 1l axial festgelegt. Ergänzend wird auf die obigen Ausführungen zu Figur 3, soweit entsprechend anwendbar, verwiesen. Dasselbe gilt für Figuren 11 und 12 bezüglich Figuren 4 bzw. 5.

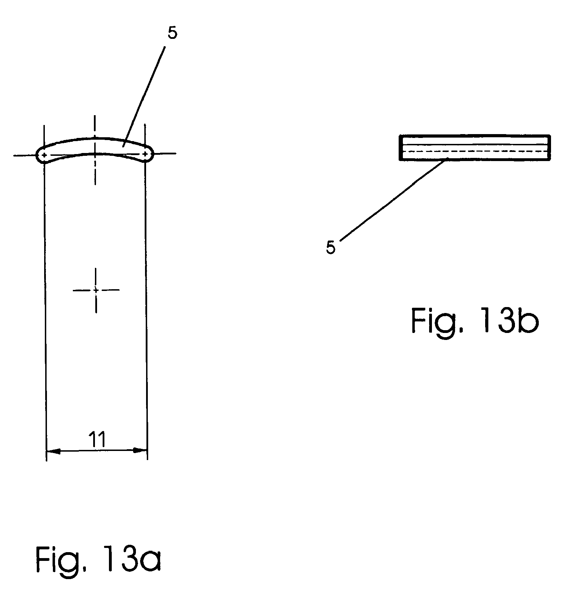

Gemäß Figur 13a besitzt der Elastomer-Stoßkörper 5 in der Stirnansicht oder im Querschnitt eine leicht gewölbte Form mit einem kleineren Innenradius und einem größeren Außenradius. In der Längsseitenansicht der Figur 13b ist erkennbar, dass der Elastomer-Stoßkörper 5 in axialer Richtung eben bzw. ohne Krümmung gestaltet ist. Komplementär zu den in Figur 13a und Figur 13b dargestellten Stirnseiten- bzw. Längsseitenprofilen ist die Aufnahmekammer 3e der Druckschale 3 ausgebildet.

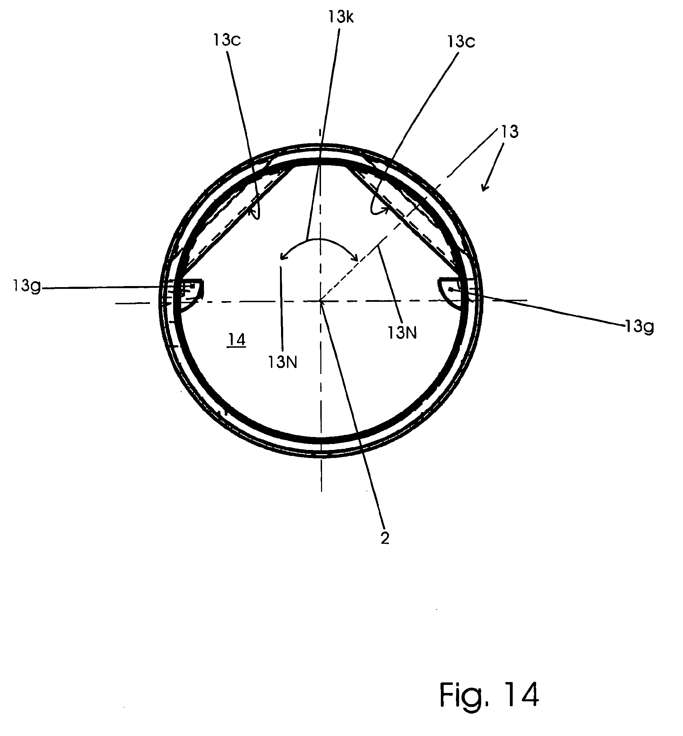

Gemäß Figur 14 schneiden sich die Keilflächen-Senkrechten bzw. - Normalen 13N der Gegen-Gleit- und Anlageflächen 13c, welche durch die Außeneinprägungen 13e des Außendruckrings 13 erzeugt sind, im Zentrum des Zahnstangen-Führungsdurchgangs 14, d. h. in der Mittel-Längsachse 2 des Außendruckrings 13. Aus der Kombination der von den Keileinrichtungen ausgehenden, in Richtung der Normalen 13N verlaufenden Radialkräfte mit von der Zahnstange 9 resultierenden Reaktionskräften ergibt sich für die Zahnstange 9 eine statisch einwandfreie Bestimmung. Da zudem die von den Gegen-Gleit- und Anlageflächen 13c des Außendruckrings 13 ausgehenden Radialkräfte aufeinander zu und zum Zentrum des Führungsdurchgangs 14 gerichtet sind, wird auch die von diesen Radialkräften erfasste Zahnstange 9 entsprechend zentriert. Gemäß Ausführungsbeispiel der Figur 14 beträgt der Schnittwinkel 13K zwischen den beiden Normalen 13N ungefähr 90°.

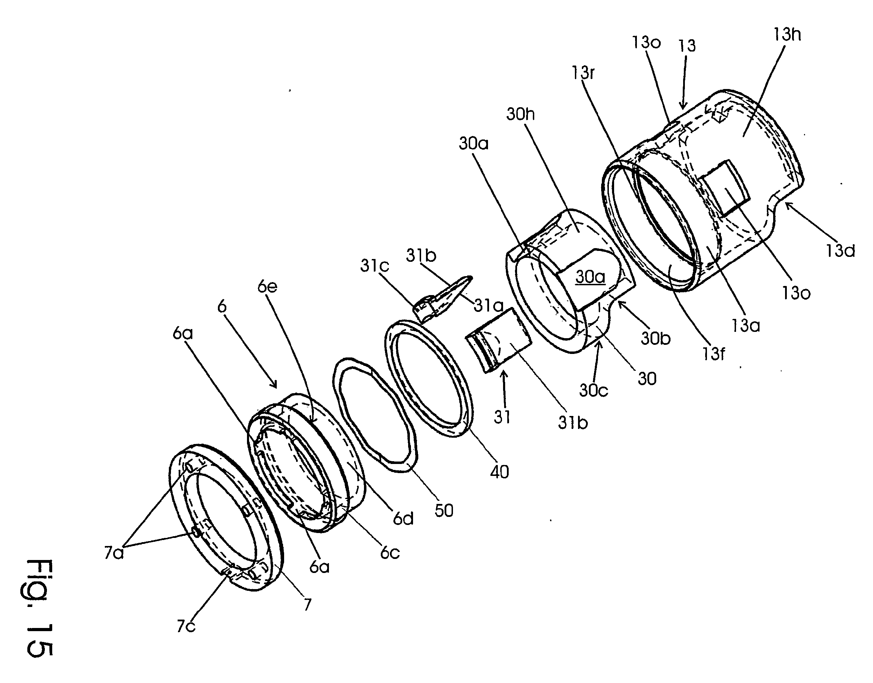

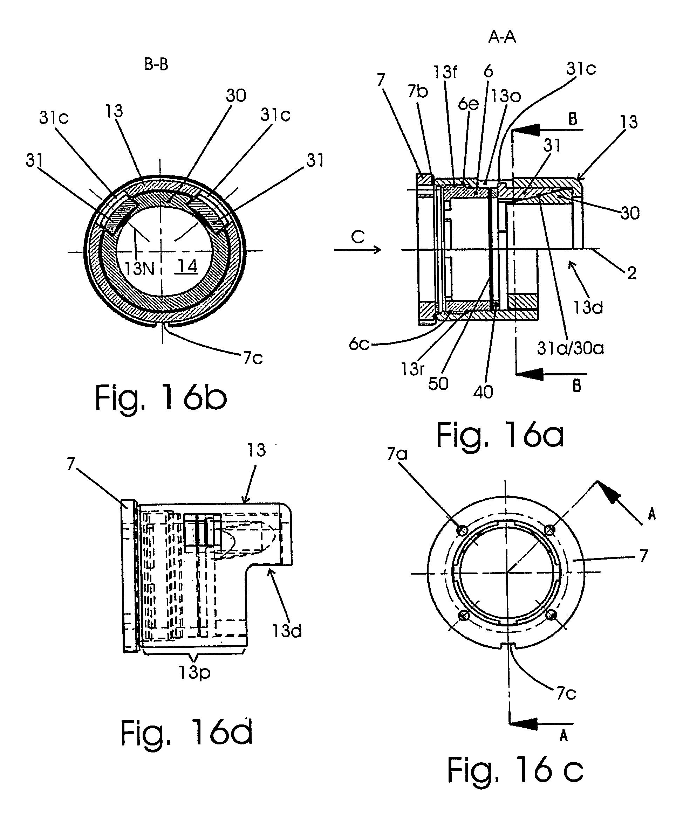

Gemäß Figur 15 umfasst beim dritten Ausführungsbeispiel der Bausatz für das ebenfalls eigenständig vormontierte Lagermodul einen Außendruckring 13, einen Innen-Führungsring 30, zwei separat gebildete Keilstücke 31, einen Axialdruckring 40, eine Wellfeder 50, einen Justage-Außengewindering 6 und einen Lenkanschlagring 7. Der Außendruckring 13 unterscheidet sich von dem des zweiten Ausführungsbeispiels im Wesentlichen dadurch, dass keine Außeneinprägungen, sondern stattdessen zwei Durchbrüche 13o im konvexen Außenmantel 13h vorgenommen sind, welche die Ringwandung vollständig durchsetzen. Ein weiterer Unterschied besteht darin, dass der offene Schalenabschnitt bzw. die offene Längsseite 13d im Vergleich zum zweiten Ausführungsbeispiel gemäß Figuren 6-14 wesentlich kürzer gestaltet ist, während der geschlossene Ringabschnitt 13p (vgl. Figur 16d) über den Innengewindeabschnitt 13a deutlich hinausgeht und wesentlich länger ist, als der Schalenabschnitt 13d des Außendruckrings 13. Entsprechend ist der Führungsring 30 in Achsrichtung und in Einschubrichtung zum Außendruckring 13 mit einem ersten Schalenabschnitt 30b und einem nachfolgenden, geschlossenen Ring- bzw. Zylinderabschnitt 30c strukturiert. Auf seinem konvexen Außenmantel 30h sind ebene Schrägflächen 30a ausgebildet, welche im Außenmantel als glatte, ebene Vertiefungen schräg bzw. rampenartig zur Mittelachse des geschlossenen Zylinderabschnitts 30c des Innen-Führungsdruckrings 30 verlaufen. Die beiden Keilstücke 31 sind jeweils zum Einlegen oder Einschieben in die Rampen-Schrägflächen 30a gestaltet, indem die Keilstückbreite etwa der Breite der vertieften Schrägflächen 30a entspricht. Dabei kommt eine eben ausgebildete Keilflanke 31a zur Anlage auf der Schrägfläche 30a des Führungsdruckrings 30, während die Außen-Keilflanke 31 b, welche konkav gewölbt sein kann, achsparallel verläuft. Die beiden Keilstücke 31 sind ferner am gegenüber dem Außendruckring hinteren Ende mit je einem Queranschlag 31c gestaltet, welcher im zusammenmontierten Zustand des Lagermoduls durch einen jeweiligen Durchbruch 13o des Außendruckrings 13 bei Lage in einer vertieften Schrägfläche 30a des Innen-Führungsdruckrings 30 hindurch ragt. Da die Keilstücke 31 in den jeweiligen Schrägvertiefungen 30a zwar achsparallel gleitend verschiebbar, aber in Umfangsrichtung formschlüssig und damit unbeweglich festgelegt liegen, bilden sie mit ihren die Durchbrüche 13o durchragenden Queranschlägen 31 c Verdrehsicherungen für den Innen-Führungsdruckring 30 gegenüber dem Außendruckring 13. Denn bei einem Verdrehversuch würde der jeweilige Queranschlag 31c des Keilstücks 31 in Umfangsrichtung an eine Begrenzung des Durchbruchs 13o anschlagen; die Durchbruchsbegrenzung 13o blockiert also Umfangsbewegungen der Keilstücke 31, wohi ngegen für eine axiale bzw. achsparallele Verschiebung der Queranschläge 31c in den Durchbrüchen 13o zur Einstellung der Radialkraft ausreichend Spiel vorhanden ist.

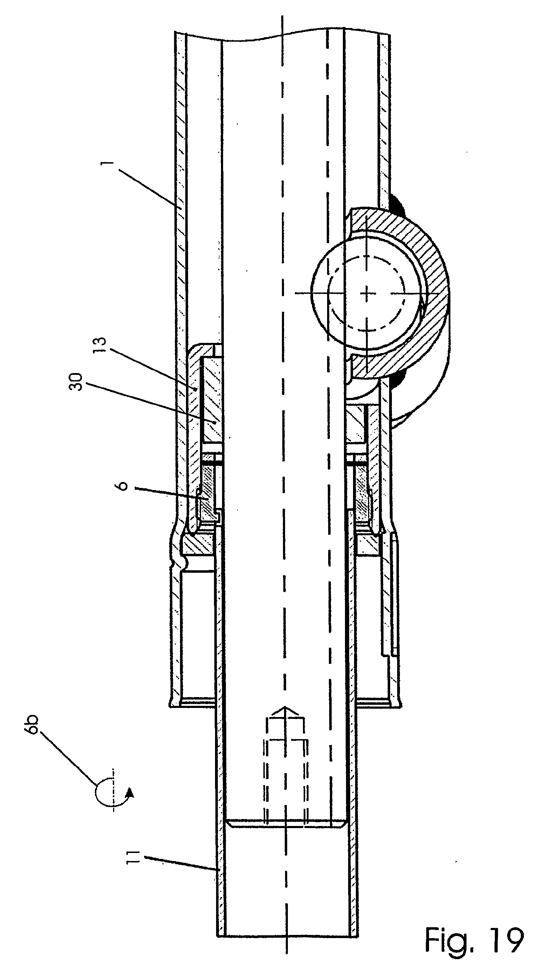

Im vormontierten Zustand gemäß Figur 16a liegen die schräge Innen-Keilflanke 31a des Einzel-Keilstücks 31 und als Gegen-Gleit- und Anlagefläche die Schrägflächenvertiefung 30a des Führungsdruckrings 30 gleitend verschiebbar aneinander. Über die Wellfeder 50 und dem nachgeordneten Axialdruckring 40 lässt sich durch Verdrehen des Außengewindering s 6 axiale Kraft auf die Einzel-Keilstücke 31 ausüben, so dass durch deren Verschiebung die Axialkraft über den Führungsdruckring 30 mit seiner Schrägflächenvertiefung 30a in eine entsprechende Radialkraft auf die in den Führungsdurchgang 14 eingeführte Zahnstange umwandelbar ist. Dies ist in Figur 19 dargestellt, wo dazu das Justagerohr 11 entsprechend obigen Ausführungen eingesetzt wird. Da der Spezialfederring 50 in Form einer Wellfeder allein keine definierte Anlagefläche bietet, ist die Nachschaltung des stirnseitig ebenen Axialdruckrings 40 zweckmäßig.

Aus Figur 15 ist die Unterteilung des Justage-Außengewinderings 6 in einen Außengewindeabschnitt 6c und einen in Richtung zum Außendruckring 13 vorausgehenden Führungsabschnitt 6d erkennbar. Diese beiden Durchmesserstufen sind durch eine Anschlagringschulter 6e voneinander abgegrenzt. Letzterer ist an der Innenseite des Außendruckrings 13 eine Gegen-Anschlagringschulter 13r zugeordnet. Dadurch wird für den Außengewindering 6 eine Einschraubbegrenzung gebildet.

Gemäß Figur 16a stehen der Außendruckring 13 über sein Innengewinde 13f und der Außengewindering 6 über sein Außengewinde 6c miteinander in kämmendem Eingriff. Der Justage-Außengewindering 6 kann so verdreht bzw. geschraubt und dabei axial gegen die Kraft der Wellfeder 50 auf das Keilstück 31 bewegt werden. Nach der konzentrischen (Vor-)Montage des Führungsdruckrings 30 mit Einzel-Keilstücken 31 sowie des Axialdruckrings 40, der Wellfeder 50 und des Justage-Außengewinderings 6 innerhalb des Außendruckrings 13 wird das Lagermodul mittels des Lenkanschlagrings 7 verschlossen, indem dieses am Stirnende des lnnengewindeabschnitts 13a des Außendruckrings 13 durch Schweißen, beispielsweise Kondensatorentladungsschweißen, angefügt wird. Dies ist durch die Schweißstelle 7b veranschaulicht.

Gemäß Figuren 16b und 16c ist am Außenmantel des Lenkanschlagrings 7 eine achsparallele Orientierungsnut 7c ausgebildet.

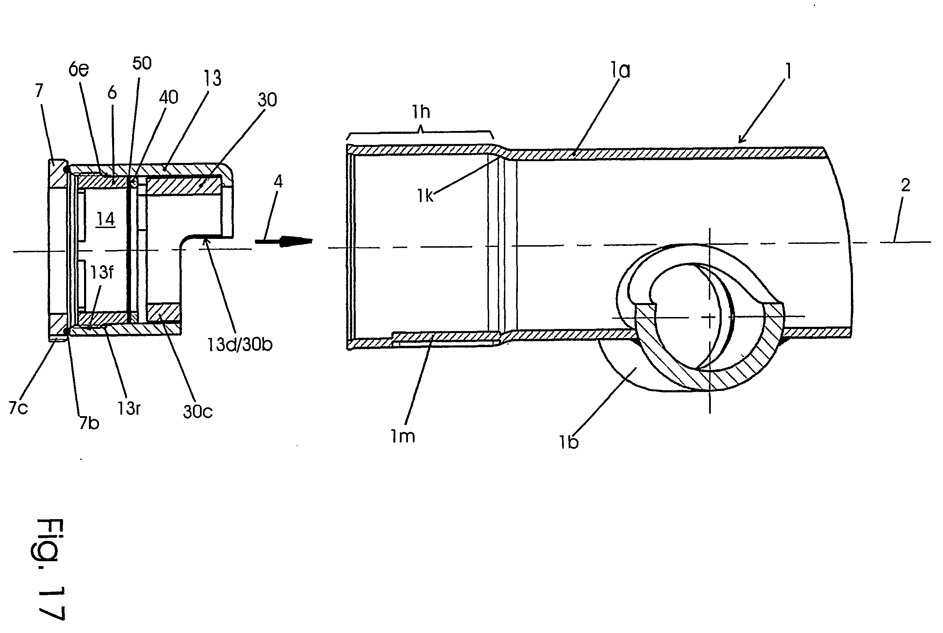

Die Orientierungsnut 7c dient gemäß Figur 17 dazu, von einer komplementären Orientierungserhöhung 1m an der Eingangs-Innenwandung des Lenkgetriebegehäuses 1 durchsetzt und so für die richtige Winkellage beim Einpressen des vormontierten Lagermoduls zu sorgen. Insbesondere ist damit gewährleistet, dass die aus den Einzelkeilstücken 31 und den komplementären Schrägvertiefungen 30a gebildeten Keileinrichtungen ihre aus Axialverschiebungen abgeleiteten Radialkräfte auf diejenige Seite der Zahnstange zu richten, welche deren Verzahnabschnitt abgewandt ist.

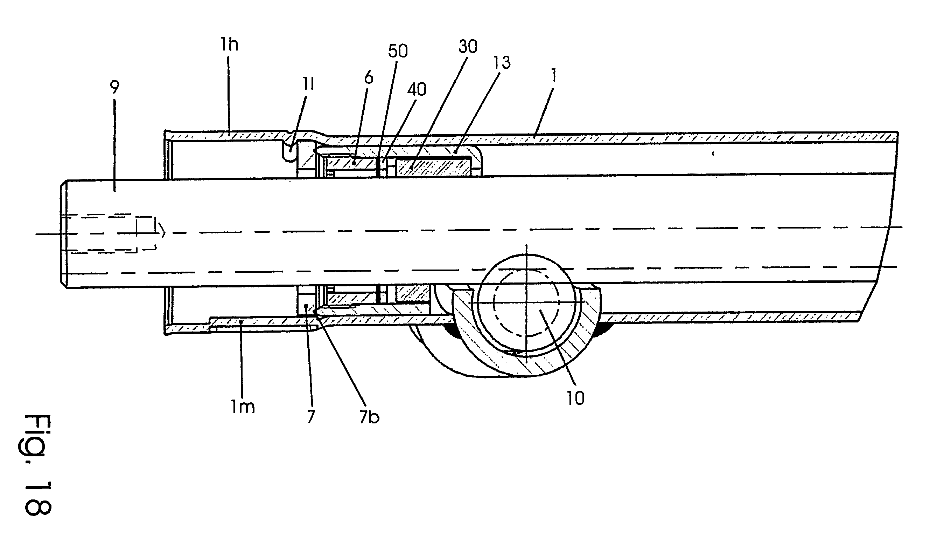

Gemäß Figur 17 ist das vormontierte, eigenständig handhabbare Lagermodul, bei dem der in Einschubrichtung 4 stirnseitig hinten angeschweißte Lenkanschlagring 7 einen größeren Außendurchmesser besitzt als der geschlossene Ringabschnitt 13p des Außendruckrings 13, zunächst in den radial erweiterten Endbereich 1 h des Lenkgetriebegehäuses 1 in Einschubrichtung 4 einzuführen. Dies erfolgt soweit, bis gemäß Figur 18 der am Außendruckring 13 hinten angeschweißte Lenkanschlagring 7 gegen die Anschlagschulter 1k (vgl. Figur 17) anstößt, welche durch die radiale Verengung unmittelbar im Endbereich der Orientierungserhöhung 1m gebildet ist. Nach dem Anschlag des Lenkanschlagrings 7 an der Anschlagschulter 1k wird zur axialen Festlegung analog wie in Figuren 3 und 10 eine radiale Sickeneinformung 1l zum Hintergreifen des Lenkanschlagrings 7 gebildet.

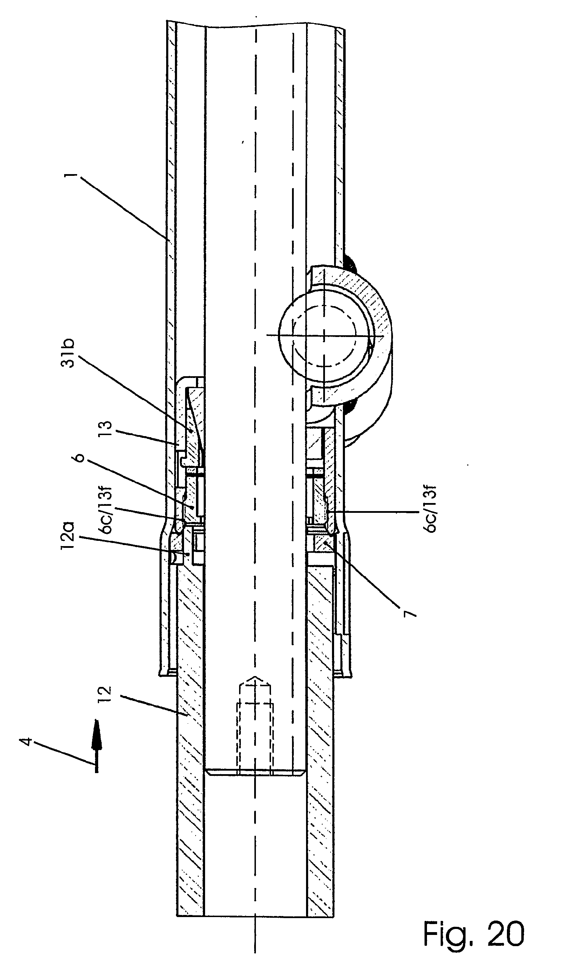

Gemäß Figur 19 wird zur Feineinstellung des Zahnstangenspiels ein Justagerohr 11 und gemäß Figur 20 zur Absicherung dieser Einstellung ein Verstemmwerkzeug 12 genauso eingesetzt, wie oben anhand von Figuren 4 und 5 des ersten Ausführungsbeispiels und Figuren 11 und 12 des zweiten Ausführungsbeispiels gezeigt. Zur Vermeidung von Wiederholungen darf auf die zu diesen Figuren gehörenden Ausführungen hier entsprechend verwiesen werden.

### Bezugszeichenliste

- 1: Lenkgetriebegehäuse
- 1 a: Zahnstangenteilrohr
- 1 b: Ritzelrohrteil
- 1 c: Ölleitung
- 1 d: Versorgungsanschluss
- 1e: Außen-Einprägungen
- 1f: Innengewindeabschnitt
- 1 g: Ritzelrohr-Kante
- 1 h: radial erweiterter Endbereich
- 1i: Innenwulst
- 1 k: Anschlagschulter
- 1l: Sicke
- 1 m: Orientierungserhöhung
- 2: Längsachse
- 3: Druckschale
- 3a: konvexe Außenseite
- 3b: konkave Innenseite
- 3c: Gleit- und Anlagefläche
- 3d: hintere Stirnseite
- 3e: Aufnahmekammer
- 3f: Öffnungskante
- 4: Einschubrichtung
- 5: Elastomerstosskörper
- 6: Justage-Außengewindering
- 6a: stirnseitige Vertiefung
- 6b: Verdrehung
- 6c: Außengewindeabschnitt
- 6d: Führungsabschnitt
- 6e: Anschlagringschulter
- 7: Lenkanschlagring
- 7a: achsparallele Bohrung
- 7b: Schweißstelle
- 7c: Orientierungsnut
- 8: Tragmittel
- 8a: Aufnahmeloch
- 9: Zahnstange
- 10: Antriebsritzel
- 11: Justagerohr
- 12: Verstemmwerkzeug
- 12a: Eingriffsvorsprung
- 13: Außendruckring
- 13a: Innengewindeabschnitt
- 13b: offener Schalenabschnitt
- 13c: Gegen-Gleit- und Anlagefläche
- 13d: offene Längsseite
- 13e: Außen-Einprägungen
- 13f: Innengewinde
- 13g: Tragschulter
- 13h: konvexer Außenmantel
- 13i: Begrenzungskante
- 13k: Schnittwinkel
- 13N: Keilflächen-Normale
- 13o: Durchbruch
- 13p: geschlossener Ringabschnitt
- 13r: Gegen-Anschlagschulter
- 14: Zahnstangen-Führungsdurchgang
- 30: Innen-Führungsdruckring
- 30a: Schrägvertiefung
- 30b: Schalenabschnitt
- 30c: geschlossener Zylinderabschnitt
- 30h: konvexer Außenmantel
- 31: Keilstück
- 31a: Innen-Keilflanke
- 31b: Außen-Keilflanke
- 31c: Quer-Anschlag
- 40: Axialdruckring
- 50: Wellfeder

## Patentansprüche

1. Lagermodul zum Einschub in ein Gehäuse (1) eines Kraftfahrzeug-Lenkgetriebe mit einer Zahnstange (9) und einem damit in Eingriff stehenden Antriebsritzel (10),
- wobei das Lagermodul wenigstens ein Druckstück (3;13,30) mit einer Aufnahmekonkavität aufweist, deren konkave Wandung einen Führungsdurchgang (14) zur axialen Führung der Zahnstange (9) umgibt,
- wobei von der Wandung ausgehend radiale Kräfte mittels mindestens einer translatorisch verstellbaren Keileinrichtung (3c,13c;30a,31a) zum Druck der im Führungsdurchgang (14) aufgenommenen Zahnstange (9) auf das darin eingreifende Antriebsritzel (10) erzeugbar sind
- **dadurch gekennzeichnet, dass** zur radialen Krafterzeugung die eine oder mehreren Keileinrichtungen (3c,13c;30a,31a) in einer Richtung verstellbar (4) geführt sind, die axial oder achsparallel zum Führungsdurchgang (14) für die Zahnstange (9) verläuft,
und ein Zugang zur Durchführung der Verstellung der einen oder mehreren Keileinrichtungen (3c 13c 30a 31a) von der Stirnseite des Gehäuses (1) des Lenkgetriebes in axialer oder achsparalleler Richtung zum Druckstück (3:13.30) und/oder den einen oder mehreren Keileinrichtungen (3c,13c, 30a, 31a) hin angeordnet ist.

2. Lagermodul nach Anspruch 1, **dadurch gekennzeichnet, dass** die eine oder mehreren Keileinrichtungen (3c,13c;30a,31a) innerhalb der Aufnahmekonkavität des Druckstücks (3; 13,30) angeordnet sind.

3. Lagermodul nach Anspruch 1 oder 2, **dadurch gekennzeichnet, dass** die eine oder mehreren Keileinrichtungen (3c,13c;30a,31a) mit Anlage und/oder Abstützung an der Wandung des Druckstücks (3;13,30) beziehungsweise seiner Aufnahmekonkavität angeordnet oder realisiert sind.

4. Lagermodul nach Anspruch 1, 2 oder 3, **dadurch gekennzeichnet, dass** der Führungsdurchgang (14) durch ein oder mehrere, separat gebildete Führungsdruckteile (3;30) direkt begrenzt ist, die innerhalb der Aufnahmekonkavität angeordnet, an deren Wandung abgestützt und mit einer radial nach innen gerichteten Kraft mittels des oder der axial oder achsparallel verstellbaren Keileinrichtungen (3c,13c;30a,31a) beaufschlagbar sind, wozu die eine oder mehreren Keileinrichtungen (3c,13c;30a,31a) zwischen dem Druckstück (13) und dem oder den Führungsdruckteilen (3,30) geführt, angeordnet und/oder ausgebildet sind.

5. Lagermodul nach einem der vorangehenden Ansprüche, **dadurch gekennzeichnet, dass** mindestens eine der Keileinrichtungen (3c,13c;30a,31a) mit zwei komplementären, einander zur Anlage zugeordneten und gegeneinander verschiebbaren Schrägen (3c,13c;30a,31a) realisiert ist, die zu unterschiedlichen, relativ zueinander führbaren Modul-Bauteilen (13,3;30,31) gehören.

6. Lagermodul nach Ansprüche 4 und 5, **dadurch gekennzeichnet, dass** je eine der beiden Schrägen einer Keileinrichtung (3c,13c) an der Druckstück-Innenwandung und an einer gegenüberliegenden Wandung des jeweiligen Führungsdruckteils (3) ausgebildet sind.

7. Lagermodul nach Anspruch 6, **gekennzeichnet durch** ein Führungsdruckteil (3) mit zum Führungsdurchgang (14) konzentrischer Grundform, das auf seinem der Druckstück-Innenwandung gegenüberliegenden Außenmantel mit der einen oder den mehreren Schrägen (3c) versehen ist, denen jeweils komplementäre Schrägen (13c) an der Druckstück-Innenwandung zugeordnet sind.

8. Lagermodul nach Ansprüche 6 oder 7, **gekennzeichnet durch** ein Führungsdruckteil (3) mit schalenartiger und/oder teilkreisartiger Grundform, wobei die Schalenöffnung beziehungsweise konkave Teilkreisseite (3b) zum Führungsdurchgang (14) weist.

9. Lagermodul nach einem der Ansprüche 6 bis 8, **dadurch gekennzeichnet, dass** das Führungsdruckteil (3) die eine oder mehreren Schrägen (3c) an einer Endkante oder in einem sonstigen Endbereich aufweist.

10. Lagermodul nach einem der Ansprüche 6 bis 9, **dadurch gekennzeichnet, dass** die eine oder mehreren Schrägen (13c) der Druckstück-Innenwandung durch äußere komplementäre Einprägungen (13e) oder sonstige Vertiefungen im Druckstück-Außenmantel (13h) gebildet sind.

11. Lagermodul nach einem der Ansprüche 6 bis 10, **dadurch gekennzeichnet, dass** das Führungsdruckteil (3) über ein oder mehrere Tragmittel verschiebbar geführt ist, die an der Druckstück-Innenwandung oder im Zahnstangen-Führungsdurchgang (14) ausgebildet sind.

12. Lagermodul nach Anspruch 11, **dadurch gekennzeichnet, dass** als Tragmittel mehrere Tragschultern (13g) von der Druckstück-Innenwandung vorspringen und einander vorzugsweise diametral gegenüberliegend angeordnet sind, worauf das Führungsdruckteil (3) mit Endseiten oder -kanten (3f) über Gleitkontakt verschiebbar aufliegt.

13. Lagermodul nach Ansprüche 4 und 5, **gekennzeichnet durch** mindestens ein separat gebildetes Keilstück (31) mit zwei im spitzen Winkel verlaufenden Keilflanken (31a,31b), von denen eine (31 b) axial oder achsparallel verläuft oder angeordnet ist, und die andere Keilflanke (31a) eine der beiden Schrägen der Keileinrichtung (30a,31a) bildet und deren zweiter Schräge (30a) zur Anlage zugeordnet ist, wobei die zweite Schräge (30a) auf einer dem Keilstück (31) gegenüberliegenden Außenseite des Führungsdruckteils (30) komplementär verläuft.

14. Lagermodul nach Anspruch 13, **dadurch gekennzeichnet, dass** das oder wenigstens eines der Keilstücke (31) zwischen der konkaven Wandung des Druckstücks (13) und dem oder einem der Führungsdruckteile (30) angeordnet ist.

15. Lagermodul nach Anspruch 13 oder 14, **dadurch gekennzeichnet, dass** zu einer Sicherung vor Verdrehen das Keilstück (31) mit einem oder mehreren, zu seiner Längsrichtung oder zur Achsrichtung (2) quer oder schräg vorspringenden Anschlägen (31 c) versehen ist, der oder die dem Druckstück (13) und/oder dem Führungsdruckteil (30) zur Anlage beziehungsweise zum Gegenhalt in einer zum Führungsdurchgang (14) konzentrischen Umfangsrichtung zugeordnet sind.

16. Lagermodul nach Anspruch 15, **dadurch gekennzeichnet, dass** der Gegenhalt als Vertiefung, Fenster, Durchbruch (13o) oder sonstige Aussparung in der Wandung des Druckstücks (13) oder Führungsdruckteils (30) ausgebildet ist, denen jeweils der oder einer der Anschläge (31 c) zum Eingriff zugeordnet ist.

17. Lagermodul nach einem der vorangehenden Ansprüche, **gekennzeichnet durch** eine zur axialen oder achsparallelen Verstellung der einen oder mehreren Keileinrichtungen (3c,13c;30a,31a) angeordnete Stelleinrichtung (6), welche relativ zum Druckstück bewegbar geführt und/oder arretierbar oder feststellbar ist.

18. Lagermodul nach Anspruch 17, **dadurch gekennzeichnet, dass** das Druckstück (13) und die Stelleinrichtung (6) jeweils eine ringartige, zylindrische oder sonst rotationssymmetrische Grundform zur konzentrischen Anordnung ineinander und komplementäre Gewindeeinrichtungen (13f) aufweisen, worüber das Druckstück (13) und die Stelleinrichtung (6) gegeneinander verdreh- und verstellbar in Eingriff bringbar sind.

19. Lagermodul nach Anspruch 18, **dadurch gekennzeichnet, dass** die kämmenden komplementären Gewindeeinrichtungen (13f,6) zur Sicherung gegen Verdrehen miteinander verstemmt, kaltverformt oder sonst deformiert sind.

20. Lagermodul nach einem der vorangehenden Ansprüche, **gekennzeichnet durch** die Anordnung eines Federelements (5;50) zur Vorspannung einer Keileinrichtung (3c,13c;30a,31a) in axialer und/oder achsparalleler Richtung.

21. Lagermodul nach Anspruch 20, **dadurch gekennzeichnet, dass** das jeweilige Federelement (5;50) gegen die Stelleinrichtung (6) einerseits und gegen eines (3c;31a) zweier gegeneinander verstellbarer Schrägelemente einer Keileinrichtung (3c,13c;30a,31a) andererseits abgestützt ist.

22. Lagermodul nach Anspruch 20 oder 21, **dadurch gekennzeichnet, dass** das Federelement (50) eine Ring- oder sonst rotationssymmetrische Grundform gegebenenfalls mit von der Ringgrundebene achsparallel vorspringenden Wellungen oder sonstigen Vertiefungen oder Erhöhungen aufweist.

23. Lagermodul nach Anspruch 22, **dadurch gekennzeichnet, dass** zwischen dem ringartigen Federelement (50) und der Keileinrichtung (30a,31a) ein fester, im wesentlichen ebener Axialdruckring (40) angeordnet ist.

24. Lagermodul nach einem der Ansprüche 20 oder 21, **dadurch gekennzeichnet, dass** das Federelement (5) in einer Aufnahmekammer (3e) und gegebenenfalls davon mit einem Teil vorstehend angeordnet ist, wobei die Aufnahmekammer (3e) baulich in dem oder einem der Führungsdruckteile (3) integriert ist.

25. Lagermodul nach Anspruch 24, **dadurch gekennzeichnet, dass** das Federelement (5) eine zur Aufnahmekammer (3e) komplementäre Grundform und/oder Elastomer oder sonstiges gummielastisches Material aufweist.

26. Lagermodul nach einem der vorangehenden Ansprüche, **dadurch gekennzeichnet, dass** der Außenmantel des Druckstücks oder eines daran stirnseitig angefügten Lenkanschlagrings (7) mit einer oder mehreren Orientierungs-Vorsprüngen und/oder -Vertiefungen (7c) versehen ist, die komplementären Vertiefungen (1m) beziehungsweise Vorsprüngen auf der Innenseite eines gedachten Lenkgetriebegehäuses (1) zugeordnet und in Umfangsrichtung derart positioniert sind, dass bei gedachter Montage mit der Zahnstange (9) und dem Antriebsritzel (10) in dem Lenkgetriebe-Gehäuse (1) die von der konkaven Wandung ausgehenden radialen Kräfte auf diejenige Zahnstangen-Außenseite oder denjenigen Zahnstangen-Außenmantelabschnitt gerichtet sind, welche beziehungsweise welcher ihren mit dem Antriebsritzel (10) kämmenden Zähnen diametral und gegebenenfalls axial versetzt gegenüberliegen.

27. Lagermodul nach einem der vorangehenden Ansprüche, wobei die Aufnahmekonkavität des Druckstücks (3;13) und gegebenenfalls des oder eines der Führungsdruckteile (3;30) zumindest teilweise mit einer Längsseiten-Öffnung (3b,3f;13d;30b) parallel zur Achse (2) des Führungsdurchgangs (14) versehen ist, **dadurch gekennzeichnet, dass** die die Öffnung (13d) bestimmenden Längsseitenkanten (13i) gegenüber der Achse (2) oder einer Längsebene des Führungsdurchgangs (14) oder eines gedachten Lenkgetriebgehäuses (1) rampen- oder keilartig schräg verlaufen.

28. Lagermodul nach einem der vorangehenden Ansprüche, **gekennzeichnet durch** mehrere Keileinrichtungen (3c,13c;30a,31a) mit einer Anordnung zueinander derart, dass deren jeweils aneinander liegende Schrägen (3c,13c;30a,31a) Normale (13N) aufweisen, die sich im Zentrum (2) des Führungsdurchgangs (14) und/oder in einem Winkel (13k) kleiner als 180° kreuzen.

29. Lagermodul nach einem der vorangehenden Ansprüche, **gekennzeichnet durch** zwei Keileinrichtungen (3c,13c;30a,31a) jeweils mit aneinander liegenden Schrägen, deren Normale (13N) zur Mitte (2) des Führungsdurchgangs (14) konvergieren.

30. Kraftfahrzeug-Lenkgetriebe, bei dem innerhalb eines Getriebe-Gehäuses (1) eine Zahnstange (9) mit einem Antriebsritzel (10) in Eingriff steht, **gekennzeichnet durch** ein darin montiertes Lagermodul, **durch** welches die Zahnstange (9) gegen das Ritzel (10) gedrückt wird,
- wobei das Lagermodul wenigstens ein Druckstück (3;13,30) mit einer Aufnahmekonkavität aufweist, deren konkave Wandung einen Führungsdurchgang (14) zur axialen Führung der Zahnstange (9) umgibt, und von der Wandung ausgehend radiale Kräfte mittels mindestens einer translatorisch verstellbaren Keileinrichtung (3c,13c;30a,31a) zum Druck der im Führungsdurchgang (14) aufgenommenen Zahnstange (9) auf das darin eingreifende Antriebsritzel (10) erzeugbar sind,
- wobei zur radialen Krafterzeugung die eine oder mehreren Keileinrichtungen (3c,13c;30a,31a) in einer Richtung verstellbar (4) geführt sind, die axial oder achsparallel zum Führungsdurchgang (14) für die Zahnstange (9) verläuft, und ein Zugang zur Durchführung der Verstellung der einen oder mehreren Keileinrichtungen (3c,13c,30a,31a) von der Stirnseite des Gehäuses (1) des Lenkgretriebes in axialer oder achsparalleler Richtung zum Druckstück und/oder den einen oder mehreren Keiteinrichtungen (3c,13c, 30a, 31a) hin angeordnet ist,
- wobei im Lagermodul eine Stelleinrichtung derart angeordnet und ausgebildet ist, dass mit ihr zu ihrer Betätigung ein Justage-Werkzeug (11) **durch** dessen axiales Einführen in das Gehäuse (1) in Eingriff bringbar ist,
- und wobei die Stelleinrichtung mit der oder den Keileinrichtungen (1e,3c;3c,13c;30a,31a) zu deren axialen oder achsparallelen Verstellung in Wirkungsverbindung steht.

31. Lenkgetriebe nach Anspruch 30, **dadurch gekennzeichnet, dass** die Aufnahmekonkavität des Druckstücks (3;13) und gegebenenfalls des oder eines der Führungsdruckteile (3;30) zumindest teilweise mit einer Längsseiten-Öffnung (3b,3f;13d;30b) parallel zur Achse (2) des Führungsdurchgangs (14) versehen ist, die die Öffnung (13d) bestimmenden Längsseitenkanten (13i) gegenüber der Achse (2) oder einer Längsebene des Führungsdurchgangs (14) oder eines gedachten Lenkgetriebgehäuses (1) rampen- oder keilartig schräg verlaufen, und im Inneren des Gehäuses (1) Auflagekanten, -schultern oder sonstige Widerhalte ausgebildet sind, welche den schrägen Öffnungs-Längsseitenkanten (13i) der Aufnahmekonkavität zugeordnet sind, um im Zuge seines axialen Einführens (4) das Lagermodul im Gehäuse zu verkanten oder zu verkeilen und **dadurch** fest zu positionieren.

32. Lenkgetriebe nach Anspruch 31, wobei das Getriebegehäuse (1) einen schräg oder quer zur Haupt-Längsachse verlaufenden Ritzel-Rohrteil (1 b) für das Antriebsritzel (10) aufweist, **dadurch gekennzeichnet, dass** der Ritzel-Rohrteil (1b) mit in das Innere des Gehäuses (1) vorstehenden Kanten (1g) ausgebildet ist, womit das Lagermodul mit seinen schrägen Längsseitenkanten (13i) verkeilbar ist.

33. Kraftfahrzeug-Lenkgetriebe, bei dem innerhalb eines Getriebe-Gehäuses (1) eine Zahnstange (9) mit einem Antriebsritzel (10) in Eingriff steht, und mit wenigstens einem Druckstück (3) mit einer Aufnahmekonkavität, deren konkave Wandung einen Führungsdurchgang (14) zur axialen Führung der Zahnstange (9) umgibt, wobei von der Wandung ausgehend radiale Kräfte mittels mindestens einer translatorisch verstellbaren Keileinrichtung (1e,3c;3c,13c;30a,31a) zum Druck der im Führungsdurchgang (14) aufgenommenen Zahnstange (9) auf das darin eingreifende Antriebsritzel (10) erzeugbar sind, **dadurch gekennzeichnet, dass** zur radialen Krafterzeugung die eine oder mehreren Keileinrichtungen (1e,3c;3c,13c;30a,31a) in einer Richtung verstellbar geführt sind, die axial oder achsparallel zum Führungsdurchgang (14) für die Zahnstange (9) und/oder zur Gehäuse-Längsachse (2) verläuft und ein Zugang zur Durchführung der Verstellung der einen oder mehreren Keileinrichtungen (3c, 13c, 30a, 31a) von der Stirnseite des Gehäuses (1) des Lenkgetriebes in axialer oder achsparalleler Richtung zum Druckstück und/oder den einen oder mehreren Keileinrichtungen (3c, 13c, 30a, 31a) hin angeordnet ist.

34. Lenkgetriebe nach Anspruch 33, **gekennzeichnet durch** ein Druckstück (3) mit schalenartiger und/oder teilzylindrischer Grundform, wobei die Schalenöffnung (3b) beziehungsweise konkave offene Teilzylinderseite (3b) zum Führungsdurchgang (14) weist.

35. Lenkgetriebe nach Anspruch 33 oder 34, wobei mindestens eine der Keileinrichtungen (1e,3c;3c,13c;30a,31a) mit zwei komplementären, einander zur Anlage zugeordneten und gegeneinander verschiebbaren Schrägen realisiert ist, **dadurch gekennzeichnet, dass** die eine Schräge (3c) auf einer Außenseite oder einem Außenmantel des Druckstücks (3) und die andere Schräge auf einer gegenüber liegenden Innenseite oder einem gegenüber liegenden Innenmantel des Gehäuses (1) ausgebildet sind.

36. Lenkgetriebe nach Anspruch 35, **dadurch gekennzeichnet, dass** das Druckstück (3) die eine oder mehreren Schrägen (3c) an einer Endkante oder in einem sonstigen Endbereich aufweist.

37. Lenkgetriebe nach einem der vorangehenden Ansprüche 30 bis 36, **dadurch gekennzeichnet, dass** das Druckstück (3) auf einer oder mehreren Tragmitteln (8) verschiebbar geführt ist, die von der Gehäuse-Innenwandung vorspringen.

38. Lenkgetriebe nach Anspruch 37, **dadurch gekennzeichnet, dass** die eine oder mehreren Tragmittel (8) mit jeweils mit einem Bolzen realisiert sind, welche von außen die Gehäusewandung durchsetzen.

39. Lenkgetriebe nach einem der Ansprüche 30 -32, **dadurch gekennzeichnet, dass** der Außenmantel des Druckstücks oder eines daran stirnseitig angefügten Lenkanschlagrings (7) mit einer oder mehreren Orientierungs-Vorsprüngen und/oder -Vertiefungen (7c) versehen ist, die komplementären Vertiefungen (1 m) beziehungsweise Vorsprüngen auf der Innenseite eines gedachten Lenkgetriebegehäuses (1) zugeordnet und in Umfangsrichtung derart positioniert sind, dass bei gedachter Montage mit der Zahnstange (9) und dem Antriebsritzel (10) in dem Lenkgetriebe-Gehäuse (1) die von der konkaven Wandung ausgehenden radialen Kräfte auf diejenige Zahnstangen-Außenseite oder denjenigen Zahnstangen-Außenmantelabschnitt gerichtet sind, welche beziehungsweise welcher ihren mit dem Antriebsritzel (10) kämmenden Zähnen diametral und gegebenenfalls axial versetzt gegenüberliegen, und die Gehäuse-Innenwandung vorzugsweise im stirnseitigen Endbereich eine oder mehrere Vertiefungen beziehungsweise Erhöhungen (1 m) komplementär zu der einen oder den mehreren Orientierungs-Erhöhungen und/oder -Vertiefungen (7c) des Druckstück-Außenmantels oder eines damit stirnseitig verbundenen Lenkanschlagrings (7) mit einer Positionierung in Umfangsrichtung derart aufweist, dass bei beidseits ineinander gerückten Orientierungs-Erhöhungen beziehungsweise -Vertiefungen (1m,7c) die von der konkaven Wandung ausgehenden Druckkräfte auf diejenige Zahnstangen-Außenseite oder denjenigen Zahnstangen-Außenmantelabschnitt gerichtet sind, welche oder welcher den mit dem Antriebsritzel (10) kämmenden Zähnen der Zahnstange (9) diametral gegenüberliegen.

40. Lenkgetriebe nach einem der Ansprüche 30 bis 39, **gekennzeichnet durch** eine zur axialen oder achsparallelen Verstellung der einen oder mehreren Keileinrichtungen (1e,3c;3c,13c;30a,31a) angeordnete Stelleinrichtung (6), welche relativ zum Getriebe-Gehäuse (1) bewegbar geführt ist.

41. Lenkgetriebe nach Anspruch 40, **dadurch gekennzeichnet, dass** das Gehäuse (1) und die Stelleinrichtung (6) jeweils eine ringartige, zylindrische oder sonst rotationssymmetrische Grundform zur konzentrischen Anordnung ineinander und komplementäre Gewindeeinrichtungen (1f) aufweisen, worüber das Gehäuse (1) und die Stelleinrichtung (6) gegeneinander verdreh- und verstellbar in Eingriff bringbar sind.

42. Lenkgetriebe nach Anspruch 41, **dadurch gekennzeichnet, dass** die kämmenden komplementären Gewindeeinrichtungen (6,1f) zur Sicherung gegen Verdrehen miteinander verstemmt, kaltverformt oder sonst deformiert sind.

43. Lenkgetriebe nach einem der Ansprüche 40 bis 42, **dadurch gekennzeichnet, dass** der Stelleinrichtung (6) und der Keileinrichtung (1e,3c;3c,13c;30a,31a) zu deren Vorspannung in axialer oder achsparalleler Richtung ein oder mehrere Federelemente (5;50) zwischengeschaltet sind.

44. Lenkgetriebe nach Anspruch 43, wobei mindestens eine der Keileinrichtungen (1e,3c;3c,13c;30a,31a) mit zwei komplementären, einander zur Anlage zugeordneten und gegeneinander verschiebbaren Schrägen realisiert ist, **dadurch gekennzeichnet, dass** das jeweilige Federelement (5;50) gegen die Stelleinrichtung (6) einerseits und gegen eines der zwei gegeneinander verstellbaren Schrägelemente der Keileinrichtung (1e,3c;3c,13c;30a,31a) andererseits abgestützt ist.

45. Lenkgetriebe nach einem der Ansprüche 30 bis 44, **gekennzeichnet durch** eine in axialer oder achsparalleler Richtung (2,4) das Lagermodul und/oder das Druckstück (3;13) und/oder die Stelleinrichtung (6) im Getriebegehäuse (1) festlegende Arretiereinrichtung.

46. Lenkgetriebe nach Anspruch 45, **dadurch gekennzeichnet, dass** die Arretiereinrichtung mit einem im Getriebegehäuse axial eingeführten Anschlagblock (7) und einer radialen Sickeneinformung (1l) oder sonstigen Verformung in der Gehäusewandung zum Hintergreifen des Anschlagblocks (7) realisiert ist.

47. Lenkgetriebe nach einem der Ansprüche 30 bis 46, **gekennzeichnet durch** mehrere Keileinrichtungen (1e,3c;3c,13c;30a,31a) mit einer Anordnung zueinander derart, dass deren jeweils aneinander liegende Schrägen (3c,13c) Normale (13N) aufweisen, die sich im Zentrum (2) des Führungsdurchgangs (14) und/oder in einem Winkel (13k) kleiner als 180° kreuzen.

48. Lenkgetriebe nach einem der Ansprüche 30 bis 47, **gekennzeichnet durch** zwei Keileinrichtungen (1e,3c;3c,13c;30a,31a) jeweils mit aneinander liegenden Schrägen (3c,13c), deren Normale (13N) zur Mitte (2) des Führungsdurchgangs (14) konvergieren.

49. *Druckstück (3,13,30)* für ein Lagermodul nach einem der Ansprüche 4 bis 18 oder für ein Lenkgetriebe nach einem der Ansprüche 35 bis 48, **gekennzeichnet durch** eine Ausbildung als Druckschale (3) mit einem über einen Teilkreis geführten, teilzylindrischen oder sonst gekrümmten oder gewölbten Mantelabschnitt mit einer konvexen Außenseite (3a) und einer konkaven Innen- beziehungsweise Öffnungsseite (3b), wobei wenigstens eine (3a) der Seiten eine oder mehrere Gleit- und Anlageflächen (3c) aufweist, die rampenartig schräg zu einer Zylinder-Längsachse (2) oder zu einer Längsrichtung der konkaven Öffnungsseite verlaufen.

50. Druckstück *(3,13,30)* nach Anspruch 49, **dadurch gekennzeichnet, dass** an einem von der oder den Schrägflächen abgewandten beziehungsweise entfernten Stirnende wenigstens eine Aufnahmekammer (3e) ausgebildet ist, die sich in die Schalenwandung erstreckt.

51. Druckstück (3,13,30) nach Anspruch 50, **dadurch gekennzeichnet, dass** in der Aufnahmekammer (3e) ein Elastomer- oder sonst gummielasticher Stoßkörper (5) vorzugsweise teilweise herausstehend aufgenommen ist.

52. Druckstück (3,13,30) nach einem der Ansprüche 49 bis 51, **gekennzeichnet durch** mehrere schräge Gleit- und Anlageflächen (3c) mit einer Anordnung zueinander derart, dass deren jeweilige Normale (13N) sich in einem Winkel kleiner als 180° kreuzen.

53. Druckstück (3,13,30) nach einem der Ansprüche 49 bis 52, **gekennzeichnet durch** zwei schräge Gleit- und Anlageflächen (13c), deren Normale (13N) konvergierend verlaufen.

54. Gehäuse für ein Lenkgetriebe nach einem der Ansprüche 33 bis 38, mit einer oder mehreren, auf der Gehäuseinnenseite ausgebildeten Schrägen, die zum Druck auf den Eingriffsbereich zwischen Antriebsritzel (10) und Zahnstange (9) angeordnet sind, **dadurch gekennzeichnet, dass** die Schrägen gegenüber einer achsparallelen Richtung (2,4) ansteigen oder abfallen.

55. Gehäuse nach Anspruch 54, **dadurch gekennzeichnet, dass** die eine oder mehreren Schrägen der konkaven Gehäuse-Innenwandung durch äußere komplementäre Einprägungen (1e) oder sonstige Vertiefungen im Gehäuse-Außenmantel gebildet sind.

56. Gehäuse nach einem der Ansprüche 54 und 55, **dadurch gekennzeichnet, dass** die mehreren Schrägen zueinander derart angeordnet sind, dass deren jeweilige Normale sich im Zentrum (2) eines Führungsdurchgangs (14) für die Zahnstange (9) und/oder in einem Winkel kleiner als 180° schneiden.

57. Gehäuse nach einem der Ansprüche 54 bis 56, **gekennzeichnet durch** zwei Schrägen (1e), deren Normale zur Mitte (2) des Führungsdurchgangs (14) konvergieren.

## Claims

1. Bearing module for insertion into a housing (1) of a motor vehicle steering gear having a rack (9) and a drive pinion (10) in mesh therewith,
- wherein the bearing module has at least one pressure member (3; 13; 30) with a receiving concavity, whose concave wall surrounds a guide passage (14) for the axial guidance of the rack (9)
- wherein radial forces may be generated from the wall by means of at least one wedge device (3c, 13c; 30a, 31 a) displaceable in translation for pressing the rack (9) received in the guide passage (14) on to the drive pinion (10) engaging therein
- **characterised in that** for generating radial force the one or more wedge devices (3c, 13c; 30a, 31 a) are guided displaceably in a direction (4) which extends axially or axially parallel to the guide passage (14) for the rack (9), and an access is provided for carrying out the displacement of the one or more wedge devices (3c, 13c; 30a, 31 a) from the end face of the housing (1) of the steering gear in an axially or axially parallel direction towards the pressure member (3; 13, 30) and/or the one or more wedge devices (3c, 13c; 30a, 31 a).

2. Bearing module according to claim 1, **characterised in that** the one or more wedge devices (3c, 13c; 30a, 31 a) are disposed inside the receiving concavity of the pressure member (3; 13; 30).

3. Bearing module according to claim 1 or 2, **characterised in that** the one or more wedge devices (3c, 13c; 30a, 31 a) are disposed or formed with contact and/or bearing against the wall of the pressure member (3; 13; 30) or its receiving concavity.

4. Bearing module according to claim 1, 2 or 3, **characterised in that** the guide passage (14) is directly bordered by one or more separately formed guide pressure parts (3; 30), which are disposed inside the receiving concavity, bear on its wall and with a radially inwardly oriented force may be acted on by means of the wedge devices (3c, 13c; 30a, 31 a) displaceable axially or axially parallel, to which end the one or more wedge devices (3c, 13c; 30a, 31 a) are guided, disposed and/or formed between the pressure member (13) and the guide pressure part(s) (3, 30).

5. Bearing module according to one of the preceding claims, **characterised in that** at least one of the wedge devices (3c, 13c; 30a, 31 a) is formed with two complementary slopes (3c, 13c; 30a, 31a) which are allocated to one another for contact and are slidable relative to one another and which belong to different module components (13, 3; 30, 31) which may be guided relative to one another.

6. Bearing module according to claim 4 and 5, **characterised in that** a respective one of the two slopes of a wedge device (3c, 13c) is formed on the pressure member inner wall and on an opposite wall of the respective guide pressure part (3).

7. Bearing module according to claim 6, **characterised by** a guide pressure part (3) which has a basic shape concentric to the guide passage (14) and which is provided on its outer casing opposite the pressure member inner wall with the one or more slopes (3c), to which respectively complementary slopes (13c) on the pressure member inner wall are allocated.

8. Bearing module according to claims 6 or 7, **characterised by** a guide pressure part (3) with a shell-like and/or part-circular basic shape, the shell aperture or concave part-circle side (3b) facing the guide passage (14).

9. Bearing module according to one of claims 6 to 8, **characterised in that** the guide pressure part (3) has the one or more slopes (3c) on an end edge or in another end region.

10. Bearing module according to one of claims 6 to 9, **characterised in that** the one or more slopes (13c) of the pressure member inner wall are formed by outer complementary impressions (13e) or other recesses in the pressure member outer casing (13h).

11. Bearing module according to one of claims 6 to 10, **characterised in that** the guide pressure part (3) is guided displaceably via one or more support means, which are formed on the pressure member inner wall or in the rack guide passage (14).

12. Bearing module according to claim 11, **characterised in that** as a support means plural support shoulders (13g) project from the pressure member inner wall and are arranged preferably diametrically opposite one another, the guide pressure part (3) resting thereon displaceably in sliding contact via the end faces or edges (3f).

13. Bearing module according to claims 4 and 5, **characterised by** at least one separately formed wedge member (31) with two wedge flanks (31 a, 31 b) converging at an acute angle, of which one (31 b) extends or is arranged axially or axially parallel, and the other wedge flank (31 a) forms one of the two slopes of the wedge device (30a, 31 a) and is allocated to its second slope (30a) for contact, the second slope (30a) extending in a complementary manner on an outer face of the guide pressure part (30) opposite the wedge member (31).

14. Bearing module according to claim 13, **characterised in that** the or at least one of the wedge members (31) is disposed between the concave wall of the pressure member (13) and the, or one of the guide pressure parts (30).

15. Bearing module according to claim 13 or 14, **characterised in that** for protecting against twisting the wedge member (31) is provided with one or more stops (31c) which project transversely or obliquely to its longitudinal or axial direction (2) and which is or are allocated to the pressure member (13) and/or the guide pressure part (30) for contact or for abutment in a circumferential direction concentric to the guide passage (14).

16. Bearing module according to claim 15, **characterised in that** the abutment is formed as a recess, window, breach (13o) or other recess in the wall of the pressure member (13) or guide pressure part (30), to which respectively the or one of the stops (31 c) is allocated for engagement.

17. Bearing module according to one of the preceding claims, **characterised by** a regulating device (6) arranged for axial or axially parallel displacement of the one or more wedge devices (3c, 13c; 30a, 31 a), which regulating device is movably guided and/or lockable or fixable relative to the pressure member.

18. Bearing module according to claim 17, **characterised in that** the pressure member (13) and the regulating device (6) each have an annular, cylindrical or otherwise rotationally symmetrical basic shape for concentric arrangement within one another and have complementary threaded devices (13f), via which the pressure member (13) and the regulating device (6) may be brought into mesh rotatably and displaceably relative to one another.

19. Bearing module according to claim 18, **characterised in that** the meshing complementary threaded devices (13f, 6), in order to protect against twisting, are caulked, cold-formed or otherwise deformed together.

20. Bearing module according to one of the preceding claims, **characterised by** the arrangement of a spring element (5; 50) for biasing a wedge device (3c, 13c; 30a, 31 a) in an axial and/or axially parallel direction.

21. Bearing module according to claim 20, **characterised in that** the respective spring element (5; 50) bears against the regulating device (6) on the one side and against one (3c; 31 a) of two slope elements displaceable relative to one another of a wedge device (3c, 13c; 30a, 31 a) on the other side.

22. Bearing module according to claim 20 or 21, **characterised in that** the spring element (50) has an annular or other rotationally symmetrical basic shape optionally with undulations or other recesses or prominences projecting axially parallel from the ring base plane.

23. Bearing module according to claim 22, **characterised in that** between the annular spring element (50) and the wedge device (30a, 31 a), a fixed, substantially plane axial pressure ring (40) is disposed.

24. Bearing module according to one of claims 20 or 21, **characterised in that** the spring element (5) is disposed in a receiving chamber (3e) and optionally with a part projecting therefrom, the receiving chamber (3e) being incorporated structurally in the or one of the guide pressure parts (3).

25. Bearing module according to claim 24, **characterised in that** the spring element (5) has a basic shape complementary to the receiving chamber (3e) and/or has elastomer or another resilient material.

26. Bearing module according to one of the preceding claims, **characterised in that** the outer casing of the pressure member or of a steering stop ring (7) attached to the end face thereof is provided with one or more orientation projections and/or recesses (7c), which are allocated to complementary recesses (1 m) or projections on the inner face of a hypothetical steering gear housing (1) and are so positioned in the circumferential direction that upon hypothetical assembly with the rack (9) and the drive pinion (10) in the steering gear housing (1) the radial forces radiating from the concave wall are oriented to the rack outer face or the section of the rack outer casing which is diametrically opposite and optionally axially staggered with respect to its teeth which mesh with the drive pinion (10).

27. Bearing module according to one of the preceding claims, wherein the receiving concavity of the pressure member (3; 13) and optionally of the or of one of the guide pressure parts (3; 30) is provided at least in part with a longitudinal side aperture (3b, 3f; 13d; 30b) parallel to the axis (2) of the guide passage (14), **characterised in that** the longitudinal side edges (13i) defining the aperture (13d) extend in a ramp-like or wedge-like manner obliquely relative to the axis (2) or a longitudinal plane of the guide passage (14) or of a hypothetical steering gear housing (1).

28. Bearing module according to one of the preceding claims, **characterised by** plural wedge devices (3c, 13c; 30a, 31 a) with an arrangement relative to one another such that their respectively mutually abutting slopes (3c, 13c; 30a, 31 a) have normals (13N) which intersect in the centre (2) of the guide passage (14) and/or at an angle (13k) of less than 180°.

29. Bearing module according to one of the preceding claims, **characterised by** two wedge devices (3c, 13c; 30a, 31 a) each with mutually abutting slopes, whose normals (13N) converge towards the centre (2) of the guide passage (14).

30. Motor vehicle steering gear, in which within a gear housing (1) a rack (9) is in mesh with a drive pinion (10), **characterised by** a bearing module mounted therein, by means of which the rack (9) is pressed against the pinion (10),
- wherein the bearing module has at least one pressure member (3; 13, 30) with a receiving concavity, whose concave wall surrounds a guide passage (14) for axial guidance of the rack (9), and radial forces may be generated from the wall by means of at least one wedge device (3c, 13c; 30a, 31 a) displaceable in translation for pressing the rack (9) received in the guide passage (14) on to the drive pinion (10) engaging therein,
- wherein for generating radial force the one or more wedge devices (3c, 13c; 30a, 31 a) are guided displaceably in a direction (4), which extends axially or axially parallel to the guide passage (14) for the rack (9), and an access is provided for carrying out the displacement of the one or more wedge devices (3c, 13c; 30a, 31 a) from the end face of the housing (1) of the steering gear in an axially or axially parallel direction towards the pressure member and/or the one or more wedge devices (3c, 13c; 30a, 31 a)
- wherein in the bearing module a regulating device is so disposed and formed that for its actuation an adjusting tool (11) may be brought into engagement therewith by axial insertion into the housing (1),
- and wherein the regulating device is in active communication with the wedge device(s) (1e, 3c; 3c, 13c; 30a, 31 a) for its/their axial or axially parallel displacement.

31. Steering gear according to claim 30, **characterised in that** the receiving concavity of the pressure member (3; 13) and optionally of the or of one of the guide pressure parts (3; 30) is provided at least in part with a longitudinal side aperture (3b, 3f; 13d; 30b) parallel to the axis (2) of the guide passage (14), the longitudinal side edges (13i) defining the aperture (13d) extend in a ramp-like or wedge-like manner obliquely relative to the axis (2) or a longitudinal plane of the guide passage (14) or of a hypothetical steering gear housing (1), and inside the housing (1) support edges, shoulders or other abutments are formed, which are allocated to the oblique longitudinal side edges (13i) of the aperture of the receiving concavity in order to bend or wedge the bearing module in the housing in the course of its axial insertion (4) and thus to position it firmly.

32. Steering gear according to claim 31, wherein the gear housing (1) has a tubular pinion part (1 b) extending obliquely or transverse to the main longitudinal axis for the drive pinion (10), **characterised in that** the tubular pinion part (1b) is formed with edges (1g) projecting into the interior of the housing (1), whereby the bearing module may be wedged with its oblique longitudinal side edges (13i).

33. Motor vehicle steering gear, in which inside a gear housing (1) a rack (9) is in mesh with a drive pinion (10), and with at least one pressure member (3) with a receiving concavity, whose concave wall surrounds a guide passage (14) for the axial guidance of the rack (9), wherein radial forces may be generated from the wall by means of at least one wedge device (1e, 3c; 3c, 13c; 30a, 31 a) which is displaceable in translation for pressing the rack (9) received in the guide passage (14) on to the drive pinion (10) engaging therein, **characterised in that** for generating radial force the one or more wedge devices (1e, 3c; 3c, 13c; 30a, 31 a) are guided displaceably in a direction which extends axially or axially parallel to the guide passage (14) for the rack (9) and/or to the housing longitudinal axis (2) and an access is provided in order to effect displacement of the one or more wedge devices (3c, 13c, 30a, 31 a) from the end face of the housing (1) of the steering gear in an axial or axially parallel direction towards the pressure member and/or the one or more wedge devices (3c, 13c, 30a, 31a).

34. Steering gear according to claim 33, **characterised by** a pressure member (3) with shell-like and/or part-cylindrical basic shape, wherein the shell aperture (3b) or concave open part-cylinder side (3b) faces the guide passage (14).

35. Steering gear according to claim 33 or 34, wherein at least one of the wedge devices (1 e, 3c; 3c, 13c; 30a, 31 a) is formed with two complementary slopes allocated to one another to provide a contact and being slidable relative to one another, **characterised in that** the one slope (3c) is formed on an outer face or outer casing of the pressure member (3) and the other slope is formed on an opposing inner face or an opposing inner casing of the housing (1).

36. Steering gear according to claim 35, **characterised in that** the pressure member (3) has the one or more slopes (3c) on an end edge or in another end region.

37. Steering gear according to one of claims 30 to 36, **characterised in that** the pressure member (3) is guided slidably on one or more support means (8) which project from the housing inner wall.

38. Steering gear according to claim 37, **characterised in that** the one or more support means (8) are each formed with a bolt, which penetrates the housing wall from the outside.

39. Steering gear according to one of claims 30-32, **characterised in that** the outer casing of the pressure member or of a steering stop ring (7) attached to the end thereof is provided with one or more orienting projections and/or recesses (7c), which are allocated to complementary recesses (1m) or projections on the inner face of a hypothetical steering gear housing (1) and are so positioned in the circumferential direction that upon hypothetical assembly with the rack (9) and the drive pinion (10) in the steering gear housing (1) the radial forces generated from the concave wall are oriented to the rack outer face or rack outer casing section which diametrically opposes optionally in an axially staggered manner its teeth meshing with the drive pinion (10), and the housing inner wall has preferably in the end face region one or more recesses or prominences (1m) complementary to the one or more orientation prominences and/or recesses (7c) of the pressure member outer casing or of a steering stop ring (7) connected to the end face thereof with a positioning in the circumferential direction such that when the orientation prominences or recesses (1m, 7c) are engaged with one another on both sides, the pressure forces generated from the concave wall are oriented to the rack outer face or the rack outer casing section which is diametrically opposite the teeth of the rack (9) meshing with the drive pinion (10).

40. Steering gear according to one of claims 30 to 39, **characterised by** a regulating device (6) which is provided for axial or axially parallel displacement of the one or more wedge devices (1e, 3c; 3c, 13c; 30a, 31a) and is guided movably relative to the gear housing (1).

41. Steering gear according to claim 40, **characterised in that** the housing (1) and the regulating device (6) each have an annular, cylindrical or other rotationally symmetrical basic shape for concentric arrangement in one another and complementary threaded devices (1f), via which the housing (1) and the regulating device (6) may be brought into mesh with one another rotatably and displaceably.

42. Steering gear according to claim 41, **characterised in that** the meshing complementary threaded devices (6, 1f) are caulked, cold-formed or otherwise deformed together to protect against twisting.

43. Steering gear according to one of claims 40 to 42, **characterised in that** one or more spring elements (5; 50) are interposed between the regulating device (6) and the wedge device (1 e, 3c; 3c, 13c; 30a, 31 a) to bias the same in an axial or axially parallel direction.

44. Steering gear according to claim 43, wherein at least one of the wedge devices (1e, 3c; 3c, 13c; 30a, 31 a) is formed with two complementary slopes which are allocated to one another for contact and are slidable relative to one another, **characterised in that** the respective spring element (5; 50) is supported against the regulating device (6) on the one side and against one of the two slope elements displaceable relative to one another of the wedge device (1e, 3c; 3c, 13c; 30a, 31 a) on the other side.

45. Steering gear according to one of claims 30 to 44, **characterised by** a locking device fixing the bearing module and/or the pressure member (3; 13) and/or the regulating device (6) in the gear housing (1) in an axial or axially parallel direction (2, 4).

46. Steering gear according to claim 45, **characterised in that** the locking device is formed with a stop block (7) axially inserted into the gear housing and a radial bead shaping (11) or other deformation in the housing wall for engaging behind the stop block (7).

47. Steering gear according to one of claims 30 to 46, **characterised by** plural wedge devices (1e, 3c; 3c, 13c; 30a, 31 a) with an arrangement relative to one another such that their respectively abutting slopes (3c, 13c) have normals (13N) which intersect in the centre (2) of the guide passage (14) and/or at an angle (13k) of less than 180°.

48. Steering gear according to one of claims 30 to 47, **characterised by** two wedge devices (1e, 3c; 3c, 13c; 30a, 31 a) each with mutually abutting slopes (3c, 13c) whose normals (13N) converge towards the centre (2) of the guide passage (14).

49. Pressure member (3, 13, 30) for a bearing module according to one of claims 4 to 18 or for a steering gear according to one of claims 35 to 48, **characterised by** a formation as a pressure shell (3) with a casing section guided via a part-circle, part-cylindrical or otherwise curved or arched and having a concave outer face (3a) and a concave inner or open side (3b), wherein at least one (3a) of the sides has one or more sliding and contact faces (3c), which extend in a ramp-like manner obliquely to a cylinder longitudinal axis (2) or to a longitudinal direction of the concave aperture side.

50. Pressure member (3, 13, 30) according to claim 49, **characterised in that** on an end facing away from or remote from the sloping face(s) at least one receiving chamber (3e) is formed, which extends into the shell wall.

51. Pressure member (3, 13, 30) according to claim 50, **characterised in that** in the receiving chamber (3e) an elastomer or other resilient impact body (5) is received, preferably partly protruding.

52. Pressure member (3, 13, 30) according to one of claims 49 to 51, **characterised by** plural oblique sliding and contact faces (3c) with an arrangement relative to one another such that their respective normals (13N) intersect at an angle of less than 180°.

53. Pressure member (3, 13, 30) according to one of claims 49 to 52, **characterised by** two oblique sliding and contact faces (13c) whose normals (13N) extend in a converging manner.

54. Housing for a steering gear according to one of claims 33 to 38, with one or more slopes formed on the housing inner face, which are arranged to press on the meshing region between the drive pinion (10) and the rack (9), **characterised in that** the slopes rise or fall relative to an axially parallel direction (2, 4).

55. Housing according to claim 54, **characterised in that** the one or more slopes of the concave housing inner wall are formed by outer complementary impressions (1e) or other recesses in the housing outer casing.

56. Housing according to either of claims 54 or 55, **characterised in that** the plural slopes are so arranged relative to one another that their respective normals intersect in the centre (2) of a guide passage (14) for the rack (9) and/or at an angle of less than 180°.

57. Housing according to one of claims 54 to 56, **characterised by** two slopes (1e) whose normals converge towards the centre (2) of the guide passage (14).

## Revendications

1. Module d'appui destiné à être inséré dans un carter (1) d'un mécanisme de direction de véhicule automobile comprenant une crémaillère (9) et un pignon d'entraînement (10) placé en prise avec cette dernière,
- le module d'appui présentant au moins une pièce de pression (3 ; 13, 30) dotée d'une concavité de réception, dont la paroi concave entoure un passage de guidage (14) pour le guidage axial de la crémaillère (9),
- des forces radiales pouvant alors, à partir de la paroi, être générées au moyen d'au moins une structure à effet de coin (3c, 13c ; 30a, 31a) ajustable par déplacement en translation, afin de presser la crémaillère (9) reçue dans le passage de guidage (14), sur le pignon d'entraînement (10) en prise dans cette dernière,
- **caractérisé en ce que**, pour la génération de forces en direction radiale, la ou les diverses structures à effet de coin (3c, 13c ; 30a, 31a) sont guidées, dans leur mouvement d'ajustement (4), dans une direction qui, par rapport au passage de guidage (14) pour la crémaillère (9), est orientée axialement ou parallèlement à l'axe,
et un accès permettant d'exécuter l'ajustement de la ou des diverses structures à effet de coin (3c, 13c ; 30a, 31a) est, depuis la face frontale du carter (1) du mécanisme de direction, disposé en direction axiale ou parallèle à l'axe par rapport à la pièce de pression (3 ; 13, 30) et/ou à la ou aux diverses structures à effet de coin (3c, 13c ; 30a, 31a).

2. Module d'appui selon la revendication 1, **caractérisé en ce que** la ou les diverses structures à effet de coin (3c, 13c ; 30a, 31a) sont disposées à l'intérieur de la concavité de réception de la pièce de pression (3 ; 13,30).

3. Module d'appui selon la revendication 1 ou 2, **caractérisé en ce que** la ou les diverses structures à effet de coin (3c, 13c ; 30a, 31a) sont disposées ou réalisées, en appui et/ou en soutien, sur la paroi de la pièce de pression (3 ; 13, 30), respectivement de sa concavité de réception.

4. Module d'appui selon la revendication 1, 2 ou 3, **caractérisé en ce que** le passage de guidage (14) est délimité directement par un élément-guide de pression (3 ; 30) ou plusieurs éléments-guides de pression (3 ; 30) formés séparément, qui sont disposés à l'intérieur de la concavité de réception, sont placés en appui contre sa paroi et peuvent être sollicités par une force dirigée radialement vers l'intérieur, au moyen de la ou des structures à effet de coin (3c, 13c ; 30a, 31a) ajustables par déplacement axial ou parallèle à l'axe, ce pour quoi la ou les diverses structures à effet de coin (3c, 13c ; 30a, 31a) sont guidées, disposées et/ou aménagées entre la pièce de pression (13) et l'élément-guide de pression ou les éléments-guides de pression (3 ; 30).

5. Module d'appui selon l'une des revendications précédentes, **caractérisé en ce qu'**au moins l'une des structures à effet de coin (3c, 13c ; 30a,31a) est réalisée avec deux biseaux (3c, 13c ; 30a, 31a) complémentaires, associés l'un à l'autre pour se mettre en contact mutuel et pouvant coulisser l'un contre l'autre, biseaux qui appartiennent à des composants différents (13, 3 ; 30, 31) du module, pouvant être guidés l'un relativement à l'autre.

6. Module d'appui selon les revendications 4 et 5, **caractérisé en ce que** les deux biseaux d'une structure à effet de coin (3c, 13c) sont ménagés, pour l'un, sur la paroi intérieure de la pièce de pression et, pour l'autre, sur une paroi, située en vis-à-vis, de l'élément-guide de pression (3) respectif.

7. Module d'appui selon la revendication 6, **caractérisé par** un élément-guide de pression (3) doté d'une forme de base concentrique au passage de guidage (14), qui est pourvu, sur sa surface d'enveloppe extérieure située en vis-à-vis de la paroi intérieure de la pièce de pression, du ou des divers biseaux (3c), auxquels sont respectivement associés des biseaux complémentaires (13c) sur la paroi intérieure de la pièce de pression.

8. Module d'appui selon les revendications 6 ou 7, **caractérisé par** un élément-guide de pression (3) doté d'une forme de base en coque et/ou en secteur de cercle, l'ouverture de la coque, respectivement la face concave (3b) du secteur de cercle, étant alors tournée vers le passage de guidage (14).

9. Module d'appui selon l'une des revendications 6 à 8, **caractérisé en ce que** l'élément-guide de pression (3) présente le ou les divers biseaux (3c) sur un bord d'extrémité ou dans une autre région d'extrémité.

10. Module d'appui selon l'une des revendications 6 à 9, **caractérisé en ce que** le ou les divers biseaux (13c) de la paroi intérieure de la pièce de pression, sont formés par des empreintes extérieures (13e) complémentaires ou autres renfoncements, dans la surface d'enveloppe extérieure (13h) de la pièce de pression.

11. Module d'appui selon l'une des revendications 6 à 10, **caractérisé en ce que** l'élément-guide de pression (3) est guidé à coulissement sur un ou plusieurs moyens de support, qui sont aménagés sur la paroi intérieure de la pièce de pression ou dans le passage de guidage (14) de la crémaillère.

12. Module d'appui selon la revendication 11, **caractérisé en ce que**, comme moyens de support, font saillie de la paroi intérieure de la pièce de pression et sont disposés l'un en vis-à-vis de l'autre, de préférence dans des positions diamétralement opposées, plusieurs épaulements de support (13g), sur lesquels l'élément-guide de pression (3) repose avec une possibilité de coulissement, par contact glissant, avec des faces d'extrémité ou des bords d'extrémité (3f).

13. Module d'appui selon les revendications 4 et 5, **caractérisé par** au moins une pièce en coin (31) formée séparément, qui présente deux flancs de coin (31a, 31b) se développant suivant un angle aigu, dont un (31b) s'étend ou est positionné axialement ou parallèlement à l'axe, tandis que l'autre flanc de coin (31a) constitue l'un des deux biseaux de la structure à effet de coin (30a, 31a) et est associé à son deuxième biseau (30a) pour s'y appliquer, le deuxième biseau (30a) se développant alors sous une forme complémentaire sur une face extérieure, située en vis-à-vis de la pièce en coin (31), de l'élément-guide de pression (30).

14. Module d'appui selon la revendication 13, **caractérisé en ce que** la ou l'une au moins des pièces en coin (31) est disposée entre la paroi concave de la pièce de pression (13) et l'élément-guide de pression (30) ou l'un des éléments-guides de pression (30).

15. Module d'appui selon la revendication 13 ou 14, **caractérisé en ce qu'**en vue d'un blocage en rotation, la pièce en coin (31) est pourvue d'une ou de plusieurs butées (31c) qui font saillie transversalement ou obliquement à sa direction longitudinale ou à la direction de l'axe (2) et qui sont associées à la pièce de pression (13) et/ou à l'élément-guide de pression (30) pour s'y appliquer, respectivement, y être mises en contre-arrêt, dans une direction circonférentielle concentrique au passage de guidage (14).

16. Module d'appui selon la revendication 15, **caractérisé en ce que** le contre-arrêt est réalisé sous forme d'un renfoncement, d'une fenêtre, d'un perçage (13o) ou autre évidement, dans la paroi de la pièce de pression (13) ou de l'élément-guide de pression (30), auquel la ou l'une des butées (31c) est respectivement associée pour y venir en prise.

17. Module d'appui selon l'une des revendications précédentes, **caractérisé par** un organe de réglage (6) positionné pour l'ajustement, en direction axiale ou parallèle à l'axe, de la ou des diverses structures à effet de coin (3c, 13c ; 30a, 31a), lequel organe de réglage est déplaçable, en étant guidé, et/ou peut être arrêté ou immobilisé, par rapport à la pièce de pression.

18. Module d'appui selon la revendication 17, **caractérisé en ce que** la pièce de pression (13) et l'organe de réglage (6) présentent chacun une forme de base en anneau, cylindrique ou d'une autre symétrie de révolution, afin d'être disposés concentriquement l'un dans l'autre, ainsi que des structures de filetage complémentaires (13f), par l'intermédiaire desquelles la pièce de pression (13) et l'organe de réglage (6) peuvent être mis en prise, avec une possibilité de rotation et d'ajustement de l'un par rapport à l'autre.

19. Module d'appui selon la revendication 18, **caractérisé en ce que** les structures de filetage complémentaires (13f, 6) en engrènement sont, en vue d'un blocage en rotation, mâtées l'une avec l'autre, soumises à un formage à froid ou déformées d'une autre manière.

20. Module d'appui selon l'une des revendications précédentes, **caractérisé par** la mise en place d'un élément élastique (5 ; 50) pour la précontrainte d'une structure à effet de coin (3c, 13c ; 30a, 31a) en direction axiale et/ou parallèle à l'axe.

21. Module d'appui selon la revendication 20, **caractérisé en ce que** l'élément élastique (5 ; 50), respectivement considéré, est en appui, d'un côté, contre l'organe de réglage (6) et, de l'autre côté, contre l'un (3c ; 31a) de deux éléments à biseau, déplaçables l'un par rapport à l'autre, d'une structure à effet de coin (3c, 13c ; 30a, 31a).

22. Module d'appui selon la revendication 20 ou 21, **caractérisé en ce que** l'élément élastique (50) présente une forme de base en anneau ou sinon dotée d'une symétrie de révolution, éventuellement avec des ondulations ou d'autres creux ou bosses, qui font saillie hors du plan de base de l'anneau, parallèlement à l'axe.

23. Module d'appui selon la revendication 22, **caractérisé en ce qu'**un anneau de pression axiale (40) solide, sensiblement plan, est disposé entre l'élément élastique (50), de forme annulaire, et la structure à effet de coin (30a, 31a).

24. Module d'appui selon l'une des revendications 20 ou 21, **caractérisé en ce que** l'élément élastique (5) est disposé dans une cavité de réception (3e) et, éventuellement, avec une partie en saillie hors de celle-ci, la cavité de réception (3e) étant intégrée structurellement dans l'élément-guide de pression (3) ou l'un des éléments-guides de pression (3).

25. Module d'appui selon la revendication 24, **caractérisé en ce que** l'élément élastique (5) présente une forme de base complémentaire de la cavité de réception (3e) et/ou un élastomère ou autre matériau possédant l'élasticité du caoutchouc.

26. Module d'appui selon l'une des revendications précédentes, **caractérisé en ce que** la surface d'enveloppe extérieure de la pièce de pression ou d'un anneau de butée de braquage (7) adjoint frontalement à cette dernière, est pourvue d'une ou de plusieurs saillies d'orientation et/ou d'un ou de plusieurs creux d'orientation (7c), qui sont associés à des creux complémentaires (1m), respectivement des saillies complémentaires, sur la face intérieure d'un carter imaginaire (1) de mécanisme de direction, et sont positionnés, en direction circonférentielle, de telle manière que, lors d'un montage imaginaire avec la crémaillère (9) et le pignon d'entraînement (10) dans le carter (1) du mécanisme de direction, les forces radiales partant de la paroi concave soient dirigées vers celui des côtés extérieurs de la crémaillère ou celui des secteurs de la surface d'enveloppe extérieure de la crémaillère, qui sont diamétralement opposés à ses dents engrenant avec le pignon d'entraînement (10), éventuellement avec un décalage axial.

27. Module d'appui selon l'une des revendications précédentes, dans lequel la concavité de réception de la pièce de pression (3 ; 13) et, le cas échéant, de l'élément-guide de pression (3 ; 30) ou de l'un des éléments-guides de pression (3 ; 30) est pourvue, au moins partiellement, d'une ouverture latérale longitudinale (3b, 3 f ; 13d ; 30b), parallèlement à l'axe (2) du passage de guidage (14), **caractérisé en ce que** les arêtes latérales longitudinales (13i) définissant l'ouverture (13d), s'étendent obliquement, à la manière de rampes ou de coins, par rapport à l'axe (2) ou à un plan longitudinal du passage de guidage (14) ou d'un carter imaginaire (1) de mécanisme de direction.

28. Module d'appui selon l'une des revendications précédentes, **caractérisé par** plusieurs structures à effet de coin (3c, 13c ; 30a, 31a) ayant une disposition mutuelle telle, que leurs biseaux (3c, 13c ; 30a, 31a) respectivement placés l'un au contact de l'autre, présentent des normales (13N) qui se croisent au centre (2) du passage de guidage (14) et/ou sous un angle (13k) inférieur à 180°.

29. Module d'appui selon l'une des revendications précédentes, **caractérisé par** deux structures à effet de coin (3c,13c ; 30a, 31a) ayant chacune des biseaux placés l'un au contact de l'autre, dont les normales (13N) convergent vers le centre (2) du passage de guidage (14).

30. Mécanisme de direction de véhicule automobile, dans lequel une crémaillère (9) est placée en prise avec un pignon d'entraînement (10) à l'intérieur d'un carter (1) du mécanisme, **caractérisé par** un module d'appui monté dedans, par lequel la crémaillère (9) est pressée contre le pignon (10),
- le module d'appui présentant au moins une pièce de pression (3 ; 13, 30) dotée d'une concavité de réception, dont la paroi concave entoure un passage de guidage (14) pour le guidage axial de la crémaillère (9), et des forces radiales pouvant alors, à partir de la paroi, être générées au moyen d'au moins une structure à effet de coin (3c, 13c ; 30a, 31a) ajustable par déplacement en translation, afin de presser la crémaillère (9) reçue dans le passage de guidage (14), sur le pignon d'entraînement (10) en prise dans cette dernière,
- étant précisé que, pour la génération de forces en direction radiale, la ou les diverses structures à effet de coin (3c, 13c ; 30a, 31a) sont guidées, dans leur mouvement d'ajustement (4), dans une direction qui, par rapport au passage de guidage (14) pour la crémaillère (9), est orientée axialement ou parallèlement à l'axe, et un accès permettant d'exécuter l'ajustement de la ou des diverses structures à effet de coin (3c, 13c ; 30a, 31a) est, depuis la face frontale du carter (1) du mécanisme de direction, disposé en direction axiale ou parallèle à l'axe par rapport à la pièce de pression et/ou à la ou aux diverses structures à effet de coin (3c, 13c ; 30a, 31a),
- qu'un organe de réglage est disposé dans le module d'appui et est conçu de telle manière qu'un outil de mise en alignement (11) puisse être amené en prise avec lui, en vue de son actionnement, par introduction axiale dans le carter (1),
- et que l'organe de réglage se trouve placé en relation de coopération avec la ou les structures à effet de coin (le, 3c ; 3c, 13c ; 30a, 31a) en vue de son ajustement par déplacement axial ou parallèle à l'axe.

31. Mécanisme de direction selon la revendication 30, **caractérisé en ce que** la concavité de réception de la pièce de pression (3 ; 13) et, le cas échéant, de l'élément-guide de pression (3 ; 30) ou de l'un des éléments-guides de pression (3 ; 30) est pourvue, au moins partiellement, d'une ouverture latérale longitudinale (3b, 3f ; 13d ; 30b), parallèlement à l'axe (2) du passage de guidage (14), les arêtes latérales longitudinales (13i) définissant l'ouverture (13d), s'étendent obliquement, à la manière de rampes ou de coins, par rapport à l'axe (2) ou à un plan longitudinal du passage de guidage (14) ou à un carter imaginaire (1) de mécanisme de direction, et à l'intérieur du carter (1) sont aménagés des arêtes d'appui, des épaulements d'appui ou autres contre-supports, qui sont associés aux arêtes latérales longitudinales (13i), obliques, de l'ouverture de la concavité de réception, pour, au cours de son introduction axiale (4), caler ou bloquer par coincement et, de cette façon, positionner fermement, le module d'appui dans le carter.

32. Mécanisme de direction selon la revendication 31, dans lequel le carter (1) du mécanisme présente un élément tubulaire de pignon (1b) pour le pignon d'entraînement (10), s'étendant obliquement ou transversalement à l'axe longitudinal principal, **caractérisé en ce que** l'élément tubulaire de pignon (1b) est doté d'arêtes (1g) s'avançant à l'intérieur du carter (1), grâce auxquelles le module d'appui peut être bloqué à l'aide de ses arêtes latérales longitudinales (13i) obliques.

33. Mécanisme de direction de véhicule automobile, dans lequel une crémaillère (9) est placée en prise avec un pignon d'entraînement (10) à l'intérieur d'un carter (1) du mécanisme, et comportant au moins une pièce de pression (3) dotée d'une concavité de réception, dont la paroi concave entoure un passage de guidage (14) pour le guidage axial de la crémaillère (9), des forces radiales pouvant alors, à partir de la paroi, être générées au moyen d'au moins une structure à effet de coin (le, 3c ; 3c, 13c ; 30a, 31a) ajustable par déplacement en translation, pour presser la crémaillère (9) reçue dans le passage de guidage (14), sur le pignon d'entraînement (10) en prise dans cette dernière, **caractérisé en ce que**, pour la génération de forces en direction radiale, la ou les diverses structures à effet de coin (1e, 3c ; 3c, 13c ; 30a, 31a) sont, dans leur mouvement d'ajustement, guidées dans une direction qui est orientée axialement ou parallèlement à l'axe du passage de guidage (14) pour la crémaillère (9) et/ou à l'axe longitudinal (2) du carter, et un accès permettant d'exécuter l'ajustement de la ou des diverses structures à effet de coin (3c, 13c; 30a, 31a) est, depuis la face frontale du carter (1) du mécanisme de direction, disposé en direction axiale ou parallèle à l'axe par rapport à la pièce de pression et/ou à la ou aux diverses structures à effet de coin (3c, 13c ; 30a, 31a).

34. Mécanisme de direction selon la revendication 33, **caractérisé par** une pièce de pression (3) dotée d'une forme de base en coque et/ou en secteur de cylindre, l'ouverture (3b) de la coque ou, respectivement, la face concave ouverte (3b) du secteur de cylindre étant alors tournée du côté du passage de guidage (14).

35. Mécanisme de direction selon la revendication 33 ou 34, dans lequel l'une au moins des structures à effet de coin (le, 3c ; 3c, 13c ; 30a, 31a) est réalisée avec deux biseaux complémentaires, associés l'un à l'autre pour se mettre en contact mutuel et pouvant coulisser l'un contre l'autre, **caractérisé en ce que** l'un des biseaux (3c) est ménagé sur une face extérieure ou une surface d'enveloppe extérieure de la pièce de pression (3), et l'autre biseau sur une face intérieure en vis-à-vis ou une surface d'enveloppe intérieure, en vis-à-vis, du carter (1).

36. Mécanisme de direction selon la revendication 35, **caractérisé en ce que** la pièce de pression (3) présente le ou les divers biseaux (3c) sur un bord d'extrémité ou dans une autre région d'extrémité.

37. Mécanisme de direction selon l'une des revendications 30 à 36, **caractérisé en ce que** la pièce de pression (3) est guidée à coulissement sur un ou plusieurs moyens de support (8), qui font saillie sur la paroi intérieure du carter.

38. Mécanisme de direction selon la revendication 37, **caractérisé en ce que** le ou les divers moyens de support (8) sont respectivement réalisés à l'aide d'une vis, qui traverse de l'extérieur la paroi du carter.

39. Mécanisme de direction selon l'une des revendications 30 à 32, **caractérisé en ce que** la surface d'enveloppe extérieure de la pièce de pression ou d'un anneau de butée de braquage (7), adjoint frontalement à cette dernière, est pourvue d'une ou de plusieurs saillies d'orientation et/ou d'un ou de plusieurs creux d'orientation (7c), qui sont associés à des creux complémentaires (1m), respectivement des saillies complémentaires, sur la face intérieure d'un carter imaginaire (1) de mécanisme de direction, et sont positionnés, en direction circonférentielle, de telle manière que, lors d'un montage imaginaire avec la crémaillère (9) et le pignon d'entraînement (10) dans le carter (1) du mécanisme de direction, les forces radiales s'exerçant à partir de la paroi concave soient dirigées vers celui des côtés extérieurs de la crémaillère ou celui des secteurs de la surface d'enveloppe extérieure de la crémaillère, qui sont diamétralement opposés à ses dents engrenant avec le pignon d'entraînement (10), éventuellement avec un décalage axial, et la paroi intérieure du carter présente, de préférence dans la région d'extrémité frontale, un ou plusieurs creux, respectivement une ou plusieurs bosses (1m), complémentaires de la ou des diverses bosses d'orientation et/ou du ou des divers creux d'orientation (7c) de la surface d'enveloppe extérieure de la pièce de pression ou d'un anneau de butée de braquage (7) relié frontalement à cette dernière, ceci suivant un positionnement en direction circonférentielle qui est tel, que lorsque les bosses d'orientation, respectivement les creux d'orientation (1m, 7c) sont poussés les uns dans les autres, des deux côtés, les forces de pression s'exerçant à partir de la paroi concave, soient dirigées vers celui des côtés extérieurs de la crémaillère ou celui des secteurs de la surface d'enveloppe extérieure de la crémaillère, qui sont diamétralement opposés aux dents, engrenant avec le pignon d'entraînement (10), de la crémaillère (9).

40. Mécanisme de direction selon l'une des revendications 30 à 39, **caractérisé par** un organe de réglage (6) qui est mis en place pour l'ajustement, par déplacement axial ou parallèle à l'axe, de la ou des diverses structures à effet de coin (le, 3c ; 3c, 13c ; 30a, 31a), et qui est guidé, dans son déplacement, relativement au carter (1) du mécanisme.

41. Mécanisme de direction selon la revendication 40, **caractérisé en ce que** le carter (1) et l'organe de réglage (6) présentent chacun une forme de base en anneau, cylindrique ou d'une autre symétrie de révolution, afin d'être disposés concentriquement l'un dans l'autre, ainsi que des structures de filetage complémentaires (1f), par l'intermédiaire desquelles le carter (1) et l'organe de réglage (6) peuvent être mis en prise, avec une possibilité de rotation et d'ajustement de l'un par rapport à l'autre.

42. Mécanisme de direction selon la revendication 41, **caractérisé en ce que** les structures de filetage complémentaires (6, 1f) en engrènement sont, en vue d'un blocage en rotation, mâtées l'une avec l'autre, soumises à un formage à froid ou déformées d'une autre manière.

43. Mécanisme de direction selon l'une des revendications 40 à 42, **caractérisé en ce qu'**un ou plusieurs éléments élastiques (5 ; 50) sont interposés entre l'organe de réglage (6) et la structure à effet de coin (1e, 3c ; 3c, 13c ; 30a, 31a) en vue de leur précontrainte en direction axiale ou parallèle à l'axe;

44. Mécanisme de direction selon la revendication 43, dans lequel l'une au moins des structures à effet de coin (1e, 3c ; 3c, 13c ; 30a, 31a) est réalisée avec deux biseaux complémentaires associés l'un à l'autre pour se mettre en contact mutuel et pouvant coulisser l'un contre l'autre, **caractérisé en ce que** l'élément élastique (5 ; 50) respectivement considéré est en appui, d'un côté, contre l'organe de réglage (6) et, de l'autre côté, contre l'un des deux éléments à biseau, ajustables l'un par rapport à l'autre, de la structure à effet de coin (le, 3c ; 3c, 13c ; 30a, 31a).

45. Mécanisme de direction selon l'une des revendications 30 à 44, **caractérisé par** un dispositif d'arrêt immobilisant en direction axiale ou parallèle à l'axe (2, 4), le module d'appui et/ou la pièce de pression (3 ; 13) et/ou l'organe de réglage (6), dans le carter (1) du mécanisme.

46. Mécanisme de direction selon la revendication 45, **caractérisé en ce que** le dispositif d'arrêt est réalisé à l'aide d'un bloc-butée (7), introduit axialement dans le carter du mécanisme, et d'un collet radial (11), formé par sertissage, ou autre déformation radiale, dans la paroi du carter, destiné à s'engager derrière le bloc-butée (7).

47. Mécanisme de direction selon l'une des revendications 30 à 46, **caractérisé par** plusieurs structures à effet de coin (le, 3c ; 3c, 13c ; 30a, 31a) ayant une disposition mutuelle telle, que leurs biseaux (3c, 13c) respectivement placés l'un au contact de l'autre, présentent des normales (13N) qui se croisent au centre (2) du passage de guidage (14) et/ou sous un angle (13k) inférieur à 180°.

48. Mécanisme de direction selon l'une des revendications 30 à 47, **caractérisé par** deux structures à effet de coin (le, 3c ; 3c, 13c ; 30a, 31a) ayant chacune des biseaux placés l'un au contact de l'autre, dont les normales (13N) convergent vers le centre (2) du passage de guidage (14).

49. Pièce de pression (3, 13, 30) pour un module d'appui selon l'une des revendications 4 à 18 ou pour un mécanisme de direction selon l'une des revendications 35 à 48, **caractérisée par** une configuration sous forme d'une coque de pression (3) comportant une partie d'enveloppe en forme de secteur cylindrique, induite par un secteur de cercle, ou incurvée ou bombée d'une autre manière, avec une face extérieure convexe (3a) et une face intérieure ou d'ouverture (3b) concave, l'une (3a), au moins, des faces présentant une ou plusieurs surfaces de glissement et d'appui (3c) qui se développent obliquement, à la manière d'une rampe, par rapport à un axe longitudinal de cylindre (2) ou à une direction longitudinale de la face d'ouverture concave.

50. Pièce de pression (3, 13, 30) selon la revendication 49, **caractérisée en ce qu'**à une extrémité frontale située à l'opposé ou éloignée de la ou des surfaces obliques, il est formé au moins une cavité de réception (3e), qui s'étend dans la paroi de la coque.

51. Pièce de pression (3, 13, 30) selon la revendication 50, **caractérisée en ce que** dans la cavité de réception (3e) est reçu, de préférence partiellement en saillie extérieure, un corps en élastomère ou autre corps d'impact (5) présentant l'élasticité du caoutchouc.

52. Pièce de pression (3, 13, 30) selon l'une des revendications 49 à 51, **caractérisée par** plusieurs surfaces de glissement et d'appui (3c) dans une disposition mutuelle telle, que leurs normales (13N) respectives se croisent sous un angle inférieur à 180°.

53. Pièce de pression (3, 13, 30) selon l'une des revendications 49 à 52, **caractérisée par** deux surfaces de glissement et d'appui (13c) obliques, dont les normales (13N) sont convergentes

54. Carter pour un mécanisme de direction selon l'une des revendications 33 à 38, présentant un ou plusieurs biseaux aménagés sur la face intérieure du carter, biseaux qui sont disposés de façon à exercer une pression sur la région d'engrènement entre le pignon d'entraînement (10) et la crémaillère (9), **caractérisé en ce que** les biseaux montent ou descendent par rapport à une direction (2, 4) parallèle à l'axe.

55. Carter selon la revendication 54, **caractérisé en ce que** le ou les divers biseaux de la paroi intérieure concave du carter sont formés par des empreintes complémentaires extérieures (1e) ou d'autres renfoncements, dans la surface d'enveloppe extérieure du carter.

56. Carter selon l'une des revendications 54 et 55, **caractérisé en ce que** les divers biseaux sont dans une disposition mutuelle telle, que leurs normales respectives se coupent au centre (2) d'un passage de guidage (14) pour la crémaillère (9) et/ou suivant un angle inférieur à 180°.

57. Carter selon l'une des revendications 54 à 56, **caractérisé par** deux biseaux (1e), dont les normales convergent vers le centre (2) du passage de guidage (14).
